(19) Europäisches Patentamt
European Patent Office
Office européen des brevets

(11) EP 3 147 965 B1

(12) **EUROPEAN PATENT SPECIFICATION**

(45) Date of publication and mention of the grant of the patent:
**21.11.2018 Bulletin 2018/47**

(21) Application number: **16174746.4**

(22) Date of filing: **16.06.2016**

(51) Int Cl.:
***H01M 2/16*** *(2006.01)* ***H01M 10/052*** *(2010.01)*
***H01M 12/06*** *(2006.01)* ***H01M 12/08*** *(2006.01)*
***H01M 10/0562*** *(2010.01)* ***H01M 2/14*** *(2006.01)*
***H01M 2/18*** *(2006.01)* *H01M 4/86 (2006.01)*
*H01M 10/0565 (2010.01)*

(54) **COMPOSITE MEMBRANE, PREPARING METHOD THEREOF, NEGATIVE ELECTRODE STRUCTURE INCLUDING THE COMPOSITE MEMBRANE, AND LITHIUM SECONDARY BATTERY INCLUDING THE NEGATIVE ELECTRODE STRUCTURE**

KOMPOSITMEMBRAN, VERFAHREN ZU DEREN HERSTELLUNG, KOMPOSITMEMBRAN ENTHALTENDE NEGATIVE ELEKTRODENSTRUKTUR, UND NEGATIVE ELEKTRODENSTRUKTUR ENTHALTENDE LITHIUM SEKUNDÄRBATTERIE

MEMBRANE COMPOSITE, SON PROCÉDÉ DE PRÉPARATION, STRUCTURE D’ÉLECTRODE NEGATIV LA COMPRENANT, ET BATTERIE SECONDAIRE AU LITHIUM COMPRENANT LA STRUCTURE D’ÉLECTRODE NÉGATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2015 KR 20150137093**
**15.06.2016 KR 20160074722**

(43) Date of publication of application:
**29.03.2017 Bulletin 2017/13**

(73) Proprietor: **Samsung Electronics Co., Ltd.**
**Gyeonggi-do 16677 (KR)**

(72) Inventors:
- **CHOI, Wonsung**
  **16678 Gyeonggi-do (KR)**
- **IM, Dongmin**
  **16678 Gyeonggi-do (KR)**

(74) Representative: **Scheuermann, Erik et al**
**Elkington and Fife LLP**
**Prospect House**
**8 Pembroke Road**
**Sevenoaks, Kent TN13 1XR (GB)**

(56) References cited:
**EP-A1- 3 041 066**
**US-A1- 2015 024 256**
**US-A1- 2015 079 485**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 147 965 B1

## Description

### FIELD OF THE INVENTION

The present disclosure relates to a composite membrane, a method of preparing thereof, a negative electrode structure including the composite membrane, and a lithium secondary battery including the negative electrode structure.

### BACKGROUND OF THE INVENTION

A lithium air battery includes a negative electrode capable of intercalation/deintercalation of lithium ions, a positive electrode including an oxygen redox catalyst using oxygen in air as a positive electrode active material, and a lithium ion conductive medium between the positive electrode and the negative electrode.

A lithium air battery has a theoretical energy density of 3,000 watt hours per kilogram (Wh/kg) or greater, which is much higher than the energy density of a lithium ion battery. Moreover, a lithium air battery is environmentally friendly and more stable than a lithium ion battery. However, to improve the cell performance of the lithium air battery, an excellent separating membrane capable of blocking moisture and gas while allowing the passage of lithium ions is needed.

US 2015/079485 A1 discloses a composite membrane including ion conductive inorganic particles; and a polymer layer, wherein the ion conductive inorganic particles penetrate the polymer layer. Also disclosed is a preparation method of the composite membrane, and a lithium-air battery including the composite membrane.

US 2015/024256 A1 discloses a solid state battery including a flexible polymer sheet, and an array of solid state pillars supported by and extending through the sheet. Each of the pillars has an anode layer, a cathode layer adjacent, and an inorganic solid electrolyte (ISE) layer interposed between the anode and cathode layers. Also disclosed is a flexible electrochemical membrane including a flexible polymer sheet, and an array of inorganic solid electrolyte pillars supported by the polymer sheet with each of the pillars extending through a thickness of the sheet to form an ionically conductive pathway therethrough.

### SUMMARY OF THE INVENTION

Provided are a novel composite membrane and a method of preparing thereof.

Provided is a negative electrode structure including the composite membrane.

Provided is a lithium secondary battery having improved cell performance using the negative electrode structure described above.

Provided is a method of preparing a negative electrode structure including the composite membrane.

Provided is a method of preparing a lithium secondary battery using the composite membrane.

Additional aspects will be set forth in part in the description which follows and, in part, will be apparent from the description, or may be learned by practice of the presented exemplary embodiments.

According to an aspect of an exemplary embodiment, provided is a composite membrane including:

an organic membrane having a plurality of through holes, and
a plurality of ion conductive inorganic material particles disposed in the through holes,
wherein a hydrophobic coating is on at least a portion of the plurality of ion conductive inorganic material particles; and wherein a contact angle of the composite membrane or the plurality of ion conductive inorganic material particles towards water is from about 30° to about 90°,

the organic membrane comprises:

i) a polymerization product of one or more multi-functional monomers selected from a multi-functional acryl-based monomer and a polyfunctional vinyl-based monomer, or
ii) a polymerization product comprising one or more multi-functional monomers selected from a multi-functional acryl monomer and a multi-functional vinyl monomer, and a polythiol comprising three or four thiol groups; and

the plurality of ion conductive inorganic material particles are glassy active material ion conductors, amorphous active material ion conductors, ceramic active material ion conductors, glass-ceramic active material ion conductors, or a combination thereof.

According to an aspect of another exemplary embodiment, provided is a method of preparing a composite membrane including:

floating a combination of a polymerizable non-aqueous compound capable of floating on a water surface, a solvent,

and a plurality of ion conductive inorganic material particles having a hydrophobic coating disposed on a water surface to form a resultant;
stirring the resultant;
removing the solvent from the stirred resultant to form a residue; and polymerizing the residue to prepare the composite membrane, wherein the polymerizable non-aqueous compound capable of floating on a water surface comprises: one or more of multi-functional monomers selected from a multi-functional acryl monomer and a polyfunctional vinyl monomer, or ii) a mixture of one or more of multi-functional monomers selected from a multi-functional acryl monomer, a polyfunctional vinyl monomer, and a polythiol having three or four thiol groups; and
the plurality of ion conductive inorganic material particles are glassy active material ion conductors, amorphous active material ion conductors, ceramic active material ion conductors, glass-ceramic active material ion conductors, or a combination thereof.

A hydrophobic coating is formed on at least a portion of an ion conductive inorganic material particle. Also, a hydrophobic coating may be formed on one side of an ion conductive inorganic material particle that is not exposed through the surface of the composite membrane.
According to an aspect of another exemplary embodiment, provided is a negative electrode structure including a negative electrode, an electrolyte, and the composite membrane.
According to an aspect of another exemplary embodiment, provided is a lithium secondary battery including the negative electrode structure.
The lithium secondary battery is a lithium air battery.
According to an aspect of another exemplary embodiment, provided is a method of preparing a negative electrode structure comprising:

- preparing a composite membrane in accordance with the method of making a composite membrane according to the above embodiment, and
- assembling the composite membrane onto a negative electrode, optionally with an electrolyte disposed between the composite membrane and the negative electrode.

According to an aspect of another exemplary embodiment, provided is a method of preparing a lithium secondary battery comprising:

- preparing a composite membrane in accordance with the method in accordance with the method of making a composite membrane according to the above embodiment, and
- assembling a lithium air battery such that the composite membrane is disposed between a positive electrode and a negative electrode formed on a substrate, optionally with an electrolyte disposed between the composite membrane and the negative electrode.

BRIEF DESCRIPTION OF THE DRAWINGS

These and/or other aspects will become apparent and more readily appreciated from the following description of the exemplary embodiments, taken in conjunction with the accompanying drawings in which:

FIG. 1A is a schematic perspective view of a composite membrane according to an embodiment;
FIG. 1B is a diagram for describing the movement of lithium ions and blocking of oxygen;
FIG. 2 is a cross-sectional view of the composite membrane shown in FIG 1A;
FIG. 3A is an illustration of a structure of a negative electrode including a composite membrane according to an embodiment;
FIG. 3B is a schematic view of a structure of a lithium air battery including a composite membrane according to another embodiment;
FIG. 3C is a schematic view of a lithium secondary battery according to another embodiment;
FIG. 4 is an illustration of a structure of a composite membrane according to an embodiment;
FIG. 5 is an illustration of the process of preparing a composite membrane according to an embodiment;
FIGS. 6A through 6C are diagrams assisting to define a contact angle a/w/p ($\theta_{awp}$), a contact angle a/m/p ($\theta_{amp}$), and a contact angle w/m/p ($\theta_{wmp}$), respectively;
FIG. 6D is a graph of the contact angle $\theta_{amp}$ versus the contact angle $\theta_{wmp}$, which is a phase diagram of a composite membrane according to an embodiment;
FIGS. 7A through 7C are images showing optical microscope analysis results of the composite membrane manufactured according to Example 3;

FIG. 8A is a graph of imaginary impedance Z" (ohm square centimeters, $\Omega cm^2$) versus real impedance Z' (ohm square centimeters, $\Omega cm^2$) showing impedance characteristics of lithium symmetry cells including the composite membrane manufactured according to Example 3;

FIG. 8B is a graph of conductivity ($\times 10^{-3}$) (siemens per centimeter, S/cm) versus a ratio $t_p/X_p$ (micrometers, $\mu m$) of thickness of the exposed PM-IB-LTAP particles ($t_p$) to an area fraction of the LTAP particles ($X_p$) showing conductivity of a composite membrane according to an embodiment;

FIG. 8C is a graph of area specific resistance (ohm square centimeters, $\Omega cm^2$) versus reverse temperature 1000/T (reverse Kelvins, K) showing changes in area specific resistance according to the temperature of a composite membrane according to an embodiment;

FIG. 8D is a schematic view showing a definition of an area fraction ($X_p$) of ion conductive inorganic material particles and a thickness of ion conductive inorganic material particles of the composite membrane in FIG. 8B;

FIG. 9 is a graph of oxygen permeability (cubic centimeter centimeters per square meter per day per atmosphere, $cm^3$ $cm/m^2$ day atm) versus kinetic diameter (Angstroms, A) showing changes in oxygen permeability of the composite membrane in Example 3 and the membranes in Comparative Examples 1 and 2;

FIG. 10 is a graph of voltage (volts, V) versus capacity (milliampere hours, mAh) showing charge and discharge characteristics of the lithium air battery manufactured according to Example 4;

FIG. 11 is a graph of capacity (milliampere hours per gram, mAh/g) versus cycle number showing cycle characteristics of the lithium air battery manufactured according to Example 4; and

FIGS. 12A and 12B are the graphs of intensity (arbitrary units, a. u.) versus binding energy (electron volts, eV) showing the results of x-ray photoelectron spectroscopy (XPS) analyses of crystalline phase LTAP particles on which a hydrophobic coating modified by iso-butyl(triethoxy)silane (IB) and 3-methacryl propyl trimethoxysilane (PM) is formed according to Example 3.

## DETAILED DESCRIPTION OF THE EMBODIMENTS

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

It will be understood that, although the terms first, second, third, etc., may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

The terminology used herein is for the purpose of describing particular embodiments only and is not intended to be limiting. As used herein, the singular forms "a," "an," and "the" are intended to include the plural forms as well, unless the context clearly indicates otherwise.

The term "or" means "and/or." As used herein, the terms such as "comprising", "including", "having", or the like are intended to indicate the existence of the features regions, integers, steps, operations, components, and/or elements disclosed in the specification, and are not intended to preclude the possibility that one or more other features or elements may exist or may be added.

It will also be understood that when an element such as a layer, a region or a component is referred to as being "on" e.g., "disposed on" another layer or element, it can be directly on the other layer or element, or intervening layers, regions, or components may also be present. In contrast, when an element is referred to as being "directly on" another element, there are no intervening elements present.

In the drawings, the sizes of elements are exaggerated or reduced for ease of description. The size or thickness

of each element shown in the drawings are arbitrarily illustrated for better understanding or ease of description, and thus the present disclosure is not limited thereto.

Unless otherwise defined, all terms (including technical and scientific terms) used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

"Polymer" as used herein is inclusive of resins.

"Mixture" as used herein is inclusive of all types of combinations, including physical mixtures, blends, alloys, solutions, and the like.

Hereinafter, a composite membrane, a method of preparing thereof, a lithium air battery and a lithium secondary battery including the composite membrane according to an embodiment are described in more detail.

Provided is a composite membrane including an organic membrane having: a plurality of through holes, and a plurality of ion conductive inorganic material particles disposed in, i.e., located in, the through holes, wherein a contact angle of the composite membrane or the ion conductive inorganic material particles towards water is from about 30° to about 90° wherein a hydrophobic coating is on at least a portion of the plurality of ion conductive inorganic material particles; the organic membrane comprises:

i) a polymerization product of one or more multi-functional monomers selected from a multi-functional acryl-based monomer and a polyfunctional vinyl-based monomer, or

ii) a polymerization product comprising one or more multi-functional monomers selected from a multi-functional acryl monomer and a multi-functional vinyl monomer, and a polythiol comprising three or four thiol groups; and

the plurality of ion conductive inorganic material particles are glassy active material ion conductors, amorphous active material ion conductors, ceramic active material ion conductors, glass-ceramic active material ion conductors, or a combination thereof.

A hydrophobic coating is disposed on at least a portion of the ion conductive inorganic material particles. Also, a hydrophobic coating may be disposed on at least a portion of the ion conductive inorganic material particles that are not exposed through the surface of the composite membrane.

In a composite membrane according to an embodiment, a contact angle formed between ion conductive inorganic material particles on which a hydrophobic coating is formed, an organic membrane, and or water is from about 30° to about 90°.

The contact angle is formed in a range of, for example, about 40° to about 85° , or about 50° to about 80°.

The contact angle has a close relationship to a detailed structure of a composite membrane. The detailed structure of the composite membrane refers to, for example, the arrangement of ion conductive inorganic particles in an organic membrane, the presence or absence of pin holes, etc.

In the present specification, the term "contact angle" may be defined by an interfacial tension between an organic membrane, ion conductive inorganic material particles on the organic membrane, and a fluid. Herein, the organic membrane shows identical interfacial tension to a layer formed of an organic membrane forming material, for example, a polymerizable non-aqueous floating compound (or polymerizable monomer). Here, floating compound denotes hydrophobic compound.

Accordingly, an interfacial tension between the organic membrane, the ion conductive inorganic material particles on the organic membrane, and the fluid on the organic membrane is identical to an interfacial tension of a polymerizable non-aqueous floating compound (or polymerizable monomer, hereinafter a "monomer"), an ion conductive inorganic material particle (hereinafter, a "particle") and fluid ($\gamma_{ap}$, $\gamma_{wp}$, $\gamma_{mp}$). The fluid represents air or water. Also, each of a, p, w, m refers to air, particles, water, and a monomer layer.

FIGS. 6A and 6B describe a contact angle. With reference to these images, a contact angle will be described in further detail.

The interfacial tensions of fluid/particles interfaces ($\gamma_{ap}$, $\gamma_{wp}$, $\gamma_{aw}$) may be described as a fluid/fluid interfacial tension and the contact angles ($\theta_{awp}$, $\theta_{amp}$, $\theta_{wmp}$) by using Young's equation in Equations 1 through 3 below and contact angle.

Equation 1

$$\gamma_{ap} - \gamma_{wp} = \gamma_{aw} \cos\theta_{awp}$$

Equation 2

$$\gamma_{ap} - \gamma_{mp} = \gamma_{am} \cos\theta_{amp}$$

Equation 3

$$\gamma_{wp} - \gamma_{mp} = \gamma_{wm} \cos\theta_{wmp}$$

Referring to FIG. 6A, when a particle 600 is dispersed on a monomer layer 620, the particle 600 attaches to an interface between air 630, which is a fluid, and the monomer layer 620, which is also a fluid. As shown in FIG. 6B, when the particle 600 disperses on the monomer layer 620, which is located on a water surface 610, the particle 600 attaches to a fluid/fluid interface. Referring to FIG. 6C, the particle 600 attaches to an interface between water 610 and air 630, which is a fluid/fluid interface. As a result, the particle 600 forms a thermodynamically stable structure in phases A through E in FIG. 6D.

FIG. 6D shows a phase diagram classifying structures of a composite membrane assuming that the ion conductive inorganic material particle, such as LTAP, has a shape similar to a sphere having a constant diameter.

If the phases A through E have thermodynamically stable structures, a total interfacial energy of the particle 600 is represented by Equations 4 through 8 below when the particle 600 attach to a fluid/fluid interface in an air atmosphere. Here, if the monomer layer 620 is assumed to be thinner than the particle 600, the particle 600 in phase A only attaches to the monomer layer 620 located on the water surface 610.

Equation 4

$$\Delta E_A = - 4\pi R^2 \gamma_{am} \cos\theta_{amp}$$

In phase B, the particle 600 only attaches to water 610.

Equation 5

$$\Delta E_B = - p\pi^2 \gamma_{aw} (1 + \cos\theta_{awp})^2$$

In phase C, monomers in the monomer layer 620 are wetted on the water surface 610 while the particle 600 attaches to an air/monomer interface instead of a monomer/water interface.

Equation 6

$$\Delta E_C = - AS_{eq} - \pi R^2 \gamma_{aw} (1 + \cos\theta_{awp})^2$$

In phase D, monomers in the monomer layer 620 are wetted on the water surface 610 while the particle 600 attaches to a monomer/water interface instead of an air /monomer interface.

Equation 7

$$\Delta E_D = - AS_{eq} - \pi R^2 \gamma_{wm} (1 + \cos\theta_{wmp})^2 - 4\pi R^2 \gamma_{aw} \cos\theta_{awp}$$

In phase E, monomers in the monomer layer 620 are wetted on the water surface 610, while the particle 600 attaches to air/monomer and monomer/air interfaces.

Equation 8

$$\triangle E_E = -0.5AS_{eq} - 0.5\pi R^2\gamma_{am}(1 + \cos\theta_{amp})^2 - 0.5\pi R^2\gamma_{wo}(1 + \cos\theta_{wop}) - 0.5\pi R^2\gamma_{wm}(1 + \cos\theta_{wmp})^2 - 2\pi^2\gamma_{aw}\cos\theta_{awp}$$

Equation 9

$$\triangle E = -AS_{eq} = \gamma_m - \gamma_{mw} - \gamma_{aw}$$

In Equations 6 through 9 above, each of $S_{eq}$ and A represents an equilibrium spreading coefficient and an area of monomer wetted on a water surface, $AS_{eq}$ is an interfacial energy obtained by wetting, $S_{eq}$ is an interfacial energy of a fluid/fluid interface. Also, R represents a diameter of an ion conductive inorganic material particle.

In Equations 1 through 3 above, $\cos\theta_{awp}$ is as shown in Equation 10 below.

Equation 10

$$\cos\theta_{awp} = \gamma_{am}/\gamma_{aw}\cos\theta_{amp} - \gamma_{mw}/\gamma_{aw}\cos\theta_{mwp}$$

A contact angle ($\theta_{awp}$, $\theta_{amp}$, $\theta_{wmp}$) may be measured by using a contact angle measuring device.

Five possible structures of a composite membrane are shown on the left side of FIG. 6D. As shown in FIG. 6D, a composite membrane may have phases A through E and their phase diagram is shown on the right side.

When the structure of a composite membrane has phase D, the monomer layer 620 covers the particle 600.

According to an embodiment, a composite membrane has phase C. When this occurs, the particle 600 is consistently dispersed on the monomer layer 620 in the composite membrane, and the particle 600 is consistently dispersed on the monomer layer 620 without pinholes in the composite membrane, to form a composite membrane with a bicontinuous structure.

When the composite membrane has phase E, the monomer layer 620 and the particle 600 are separated.

According to an embodiment, a structure of the composite membrane is primarily determined by interfacial tension between air, monomers, water, and particles as described above.

The suitable contact angle that makes the ion conductive inorganic particle: i) placing the particle on a water surface, ii) protruding through the upper and bottom surfaces of the monomer layer, and iii) being surrounded by the monomers at sides. The contact angles $\theta_{awp}$, $\theta_{amp}$, and $\theta_{wmp}$ represent contact angles of air/water/particle, air/monomer/particle, and water/monomer/particle systems, respectively.

When an ion conductive inorganic material particle is modified to form a hydrophobic coating on its surface to supply the particle to the monomer layer located on the water surface, the particles do not get soaked in water.

A surface modification of the ion conductive inorganic material particle may be confirmed by using x-ray photoelectron spectroscopy (XPS).

A ratio of a total surface area of the exposed ion conductive inorganic particles(Ap) to a total surface area ($A_{total}$) of the composite membrane ($X_p=A_p/A_{total}$) may be from about 0.05 to about 0.5, for example, from about 0.2 to about 0.4. When the ratio is within such ranges, the ion conductivity of the composite membrane is good.

During the manufacturing process of the composite membrane, a hydrophobic coating is formed on at least a portion of the ion conductive inorganic material particles, such that the polymerizable non-aqueous floating compound used for forming an organic membrane is not located on a first surface and a second surface opposite to the first surface of the ion conductive inorganic material particles.

As a result, the ion conductive inorganic material particles may have a structure in which they are exposed through the surface of the composite membrane in the finally obtained composite membrane.

In the present specification, the phrase "first surface" refers to a surface on which the ion conductive inorganic material particles located on a top surface of the composite membrane 20 are exposed and the phrase "second surface" refers to a surface which is opposite to the "first surface" and on which the ion conductive inorganic material particles located on a bottom surface of the composite membrane 20 are exposed, as shown in FIG. 2.

A hydrophobic coating is formed on an unexposed face of the ion conductive inorganic material particle. The unexposed face 23 of the ion conductive inorganic material particle of the composite membrane may represent a third surface or a fourth surface of the ion conductive inorganic material particle 21 in FIG. 2. As a result of forming the hydrophobic coating, during the manufacturing process of the composite membrane, the ion conductive inorganic material particle may be prevented from being immersed in water, the ion conductive inorganic material particle may be uniformly

dispersed in the composite membrane, and thus, a strong composite membrane without any empty space between the ion conductive inorganic material particle and the organic membrane may be obtained. Also, as a result of forming the hydrophobic coating, the entire surface of the composite membrane and the top surface of the hydrophobic coating may not be covered by an organic membrane forming material such as a polymer.

The hydrophobic coating may be a continuous coating or a discontinuous coating, such as an island. As such, when a hydrophobic coating is formed on at least a portion of the ion conductive inorganic material particle, it provides suitable buoyancy in water.

The formation of a hydrophobic coating on at least a portion of the ion conductive inorganic material particle may be confirmed through an XPS analysis. For example, the existence of Si 2p and C 1s may be confirmed through an XPS analysis.

The hydrophobic coating includes a condensation reaction product of at least one selected from the compounds represented by Formula 1 below.

Formula 1

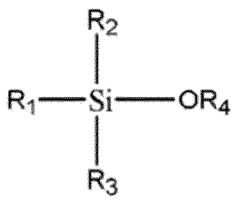

In Formula 1 above, $R_1$ through $R_3$ may be each independently a substituted or unsubstituted C1-C20 alkyl group, a substituted or unsubstituted C1-C20 alkoxy group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C6-C20 aryloxy group, a substituted or unsubstituted C2-C20 heteroaryl group, a substituted or unsubstituted C2-C20 heteroaryloxy group, a substituted or unsubstituted C3-C20 heteroarylalkyl group, a substituted or unsubstituted C2-C20 heterocyclic group, or a halogen atom,

$R_4$ may be a substituted or unsubstituted C1-C20 alkyl group or a substituted or unsubstituted C6-C20 aryl group.

$R_1$ through $R_3$ may be, for example, methyl, ethyl, butyl, iso-butyl, octyl, methoxy, ethoxy, octadecyl, 3-methacryloxypropyl, decyl, propyl, chlorine, and the like.

$R_4$ may be, for example, methyl, ethyl, butyl, propyl, iso-butyl, octyl, and the like.

A compound represented by Formula 1 may be at least one selected from iso-butyl trimethoxysilane, octyl trimethoxysilane, propyl trimethoxysilane, decyl trimethoxysilane, dodecyl trimethoxysilane, octadecyl trimethoxysilane, 3-methacryloxypropyl trimethoxysilane, n-octane decyltriethoxysilane, 1H, 1H, 2H, 2H-perfluorooctyl triethoxysilane, and 3-mercaptopropyl trimethoxysilane.

Also, an amount of condensation reaction product of the compound represented by Formula 1 in the hydrophobic coating may be about 0.1 parts by weight to about 30 parts by weight, for example, about 0.1 parts by weight to about 10 parts by weight, for example about 0.1 parts by weight to about 5 parts by weight, based on 100 parts by weight of the ion conductive inorganic material particles.

The surface of the composite membrane may include a sea-island structure in which the ion conductive inorganic material particles are discontinuously dispersed on a continuous organic membrane.

A cross-section of the composite membrane may include an alternately aligned structure of the organic membrane and the ion conductive inorganic material particles.

The ion conductive inorganic material particles embedded in the organic membrane may be placed in the organic membrane as a monolayer.

The ion conductive inorganic material particles have a single particle structure without any boundary between the particles. As such, the ion conductive inorganic material particles do not have a grain boundary. Also, the organic membrane is a dense membrane, that is not porous. According to an embodiment, an organic membrane in a composite membrane may be a polymer membrane including one or more selected from a homopolymer, a block copolymer, and a random copolymer.

FIGS. 1A and 1B are schematic perspective views of a composite membrane according to an embodiment.

Referring to FIGS. 1A and 1B, the composite membrane 10 includes a polymer membrane 12 on which a plurality of through holes 13 are formed, wherein ion conductive inorganic material particles 11 are inserted into the through holes 13 to form a coupled structure. The polymer membrane 12 is one of the organic membranes described above. The ion conductive inorganic material particles 11 may have a hydrophobic coating (not shown) on at least a portion thereof to form hydrophobic particles. Here, the hydrophobic coating may be a continuous coating or a discontinuous coating such as an island. As such, when a hydrophobic coating is formed on at least a portion of the ion conductive inorganic material particles 11, it provides suitable buoyancy to the composite membrane in water.

The ion conductive inorganic material particles 11 have a structure that pass through the polymer membrane 12, and they are disposed such that they are exposed on both sides of the composite membrane 10. Here, a size of the through hole 13 is adjusted according to the size of the ion conductive inorganic material particle 11 during the manufacturing process of the composite membrane.

A contact angle of the ion conductive inorganic material particles towards water is in a range of about 30° to about 90°, for example, about 30° to about 85°, or about 35° to about 80°.

When the composite membrane in FIG. 1B is used as a barrier membrane for a lithium air battery to block moisture or gases such as oxygen or carbon dioxide, ions (for example, lithium ions) pass through an ion conductive area formed of ion conductive inorganic material particles 11 and gases such as oxygen, carbon dioxide or moisture are blocked by the polymer membrane 12. Here, the polymer membrane 12 includes polymers capable of blocking moisture or gases such as oxygen and carbon dioxide.

As described above, the ion conductive inorganic material particles 11 are exposed from the surface of the composite membrane 10. The exposed area of the ion conductive inorganic material particles 11 may be about 30% to about 80%, for example, about 40% to about 70%, or about 50% to about 60%, based on the total surface area of the composite membrane. When the ion conductive inorganic material particles 11 have the exposed area as described above, a composite membrane having excellent ion conductivity may be obtained.

In the composite membrane 10, a thickness of an ion conductive inorganic material particle 11 refers to a difference in heights of a top surface and a bottom surface of the ion conductive inorganic material particle 11 regardless of the shape of the ion conductive inorganic material particle 11, and the ion conductive inorganic material particle 11 and the polymer membrane 12 may be of identical thickness. When the ion conductive inorganic material particle 11 and the polymer membrane 12 have the same thickness, the composite membrane may be easily coupled with other components and have improved binding strength.

According to another embodiment, the ion conductive inorganic material particle 11 and a polymer may not have identical thickness. For example, a thickness of the polymer membrane 12 may be about 90 millimeters (mm) and a thickness of the ion conductive inorganic material particle may be about 95 mm.

The ion conductive inorganic material particles 11 may form an ion conductive region while the polymer membrane 12 may have a non-ion conductive region. The ion conductive region and the non-ion conductive region may be placed to contact each another in a membrane-thickness direction (Y-axis direction) to form a bicontinuous structure.

The phrase "bicontinuous structure" refers to a structure in which one or more ion conductive inorganic material particles forming an ion conductive region and one or more polymer membranes forming a non-ion conductive region contact and mutually connect to one another.

The ion conductive inorganic material particles 11 have a single particle form without any grain boundaries as shown in FIG. 1A.

FIG. 2 shows a cross-sectional view of the composite membrane shown in FIG. 1A.

Referring to FIG. 2, when the composite membrane 20 is used as an oxygen barrier membrane of a lithium air battery, ions (for example, lithium ions) pass through an ion conductive region formed of ion conductive inorganic material particles 21 as shown in a, and gases such as oxygen or moisture is blocked by the polymer membrane 22 as shown in b. Here, the polymer membrane 22 includes a polymer capable of blocking moisture and gases such as oxygen and carbon dioxide.

FIG. 4 shows a composite membrane 40 according to an embodiment having a membrane structure including LTAP particles 41 embedded in a polymer matrix as lithium ion transport channels.

The composite membrane 40 provides a selective lithium ion transport pathway derived from embedded single LTAP particles without grain boundaries therebetween.

The LTAP particles 41 have been surface modified using PM and IB. Also, a polymer matrix 42 includes polymers obtained from a reaction between 4T and TTT.

The composite membrane 40 is flexible and lightweight because it is ten times lighter than an LTAP membrane as it includes a non-permeable polymer matrix 42. An area specific resistance of the composite membrane 40 decreases as the thickness of the LTAP increases, and a composite membrane densely filled with lithium ion transport channels shows a resistance of 29 ohm square centimeters ($\Omega cm^2$) at a temperature of about 60°C. Such a composite membrane has excellent barrier characteristics with respect to oxygen and moisture.

According to an embodiment, a composite membrane may be used as a gas barrier membrane of a lithium air battery, a negative electrode protection layer of a lithium secondary battery, and the like.

According to an embodiment, a composite membrane has a gas permeability of about $10^{-3}$ $cm^3cm/m^2$ day atm to about 1,000$cm^3cm/m^2$ day atm, for example, about 0.1 $cm^3cm/m^2$ day atm to about 1,000$cm^3cm/m^2$ day atm. Here, the term "gas" is used to include all of oxygen, carbon dioxide, moisture, and humidity.

The shape of the ion conductive inorganic material particle is not limited to the shapes shown in FIGS. 1A, 1B,

and 2. For example, the ion conductive inorganic material particle may have various vertical and horizontal cross-sectional shapes, such as circular shape, triangular shape, quasi-triangular shape, triangular shape with semi-circles, triangular shape with one or more rounded corners, square shape, rectangular shape, rectangular shape with semi-circles, polygonal shape, or any of various common regular and irregular shapes. For example, the ion conductive inorganic material particle may have various three-dimensional shapes such as cubical shape, spherical shape, globular shape, elliptical shape, rod, stick-like shape, tetrahedral shape, pyramidal shape, octahedral shape, cylindrical shape, polygonal pillar-like shape, conical shape, columnar shape, tubular shape, helical shape, funnel shape, dendritic shape, or any of various common regular and irregular shapes.

A size of the ion conductive inorganic material particle denotes an average diameter when the ion conductive inorganic material particle has a spherical shape. When the ion conductive inorganic material particle has a different shape, the size of the particle is determined by a length of the longer axis.

The ion conductive inorganic material particles 11 and 21 have a structure so that they may pass through the front and the back of the polymer membranes 12 and 22, and thus, the ion conductive inorganic material particles 11 and 21 are exposed through both surfaces of the composite membrane 10 and 20. As such, when a composite membrane has a structure in which the particles are exposed through both surfaces, a pathway for lithium ions may be secured, which may improve the conductivity of the composite membrane.

In a conventional lithium air battery, ion conductivity and oxygen barrier function are simultaneously achieved by using a ceramic material membrane. However, such ceramic material membrane is heavy, and a large-scale production and formation of the membrane have limitations. Also, the ceramic material membrane has low mechanical strength causing brittleness with respect to external shock and limitations on reducing the weight of the membrane or thickness, thereby causing difficulties in commercialization.

According to an embodiment, a composite membrane has ion conductive inorganic material particles exposed through the surface of the composite membrane as shown in FIGS. 1A, 1B, and 2, which provide a pathway for ions to pass through and thus, showing excellent ion conductivity. Also, a hydrophobic coating is formed on at least a portion of the ion conductive inorganic material particle to improve dispersibility of the ion conductive inorganic material particle in the composite membrane, and thus, it facilitates the formation of a structure in which the ion conductive inorganic material particles are exposed through the surface of the finally obtained composite membrane. Also, compared to a conventional ceramic material membrane, the composite membrane may be more easily produced as a thin film to reduce resistance and weight, and is suitable for a large scale production. Furthermore, the composite membrane has excellent flexibility due to the presence of polymers, which can be processed in any desired manner, allowing a flexible cell design and showing improved mechanical strength.

According to an embodiment, when the composite membrane includes a polymer capable of blocking moisture or humidity, and gases such as oxygen and carbon dioxide, the composite membrane has excellent ability to block moisture or humidity, and gases. Accordingly, such composite membrane may be produced with lower cost compared to a conventional ceramic material membrane and when such composite membrane is used, the composite membrane may be produced in a large scale and in a thin film with lightweight having a simple manufacturing process. Also, when such composite membrane is used, a lithium secondary battery having an improved lifespan may be manufactured.

According to another embodiment, provided is a composite membrane including an ion conductive region and a non-ion conductive region, wherein the ion conductive region and the non-ion conductive region are disposed to contact one another in a membrane thickness direction (Y-axis direction) to have a bicontinuous structure), the ion conductive region includes ion conductive inorganic material particles having a hydrophobic coating formed on at least a portion thereof, and the non-ion conductive region includes polymers. Here, the ion conductive inorganic material particles are a single particle without any grain boundaries.

The ion conductive inorganic material particles are exposed through the surface of the composite membrane to maintain ion conductivity and excellent flexibility, such that the composite membrane may be processed in any desired manner.

The ion conductive inorganic material particle may be, for example, a lithium ion conductive inorganic material particle.

An amount of the ion conductive inorganic material particle on which the hydrophobic coating is formed on at least a portion thereof may be about 10 parts by weight to about 90 parts by weight, for example, about 20 parts by weight to about 80 parts by weight, or about 30 parts by weight to about 70 parts by weight, based on a total of 100 parts by weight of the composite membrane. While not wishing to be bound by theory, it is understood that when the amount of the ion conductive inorganic material particle on which the hydrophobic coating is formed is within the ranges described above, a composite membrane having improved ion conductivity and mechanical strength may be obtained.

The ion conductive inorganic material particle is one or more selected from a combination of a glassy active material ion conductor, an amorphous active material ion conductor, a ceramic active material ion conductor, and a glass-ceramic active material lion conductor, or a combination thereof.

The ion conductive inorganic material particle may be, for example, $Li_{1+x+y}Al_xTi_{2-x}Si_yP_{3-y}O_{12}$ (wherein 0<x<2

and 0≤y<3), $BaTiO_3$, $Pb(Zr,Ti)O_3$ (PZT), $Pb_{1-x}La_xZr_{1-y}Ti_yO_3$ (PLZT) (wherein 0≤x<1 and 0≤y<1), $Pb(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, SiC, lithium phosphate ($Li_3PO_4$), lithium titanium phosphate ($Li_xTi_y(PO_4)_3$, wherein 0<x<2 and 0<y<3), lithium aluminum titanium phosphate ($Li_xAl_yTi_z(PO_4)_3$, wherein 0<x<2, 0<y<1, and 0<z<3), $Li_{1+x+y}(Al, Ga)_x(Ti, Ge)_{2-x}Si_yP_{3-y}O_{12}$ (wherein 0≤x≤1 and 0≤y≤1), lithium lanthanum titanate ($Li_xLa_yTiO_3$, wherein 0<x<2 and 0<y<3), lithium germanium thiophosphate ($Li_xGe_yP_zS_w$, wherein 0<x<4, 0<y<1, 0<z<1, and 0<w<5), lithium nitride ($Li_xN_y$, wherein 0<x<4 and 0<y<2), $SiS_2$ type glass ($Li_xSi_yS_z$, wherein 0<x<3,0<y<2, and 0<z<4), $P_2S_5$ type glass ($Li_xP_yS_z$, wherein 0<x<3, 0<y<3, and 0<z<7), $Li_2O$, LiF, LiOH, $Li_2CO_3$, $LiAlO_2$, $Li_2O$-$Al_2O_3$-$SiO_2$-$P_2O_5$-$TiO_2$-$GeO_2$ type ceramics, and garnet type ceramics $Li_{3+x}La_3M_2O_{12}$ (wherein 0≤x<10 and M = Te, Nb, or Zr).

The $Li_{3+x}La_3M_2O_{12}$ is for example $Li_7La_3M_2O_{12}$.

As the ion conductive inorganic material particle, LTAP($Li_{1.4}Ti_{1.6}Al_{0.4}P_3O_{12}$) or $Li_2O$-$Al_2O_3$-$SiO_2$-$P_2O_5$-$TiO_2$-$GeO_2$ type ceramic may be used.

As described above, the ion conductive inorganic material particles do not have a grain boundary between the particles, such that a composite membrane having the ion conductive inorganic material particles may secure a lithium conductive pathway having low resistance. As a result, the conduction and mobility of lithium ions may be very easy so as to substantially increase the conductivity and lithium ion transmissibility. Also, the composite membrane has good flexibility and mechanical strength compared to a membrane formed solely of inorganic particles.

The fact that the ion conductive inorganic material particles are a single particle without any grain boundaries may be confirmed through a scanning electron microscope (SEM).

An average diameter of the ion conductive inorganic material particle may be about 1 μm to about 300 μm, for example, about 1 μm to about 200 μm, or about 1 μm to about 150 μm. When an average diameter of the ion conductive inorganic material particle is in the ranges described above, a composite membrane including ion conductive inorganic material particles having a single particle form without a grain boundary may be easily obtained through the processes such as polishing and the like during the manufacturing of the composite membrane.

The ion conductive inorganic material particles have a uniform size and maintain the uniform size in the composite membrane. For example, $D_{50}$ of the ion conductive inorganic material particle is about 110 μm to about 130 μm and $D_{90}$ is about 180 μm to about 200 μm. $D_{10}$ is about 60 μm to about 80 μm. Here, the terms $D_{50}$, $D_{10}$, and $D_{90}$ each refer to particle sizes at 50 volume%, 10 volume%, and 90 volume% in a cumulative distribution curve.

Polymers forming the composite membrane may be selected according to the purpose of the composite membrane.

When the polymer is a polymer having barrier characteristics for blocking one or more selected from oxygen and moisture, the composite membrane has characteristics of, for example, blocking negative electrode corrosive gases. The negative electrode corrosive gas may be water vapor, carbon dioxide, oxygen, and the like. Accordingly, such composite membrane may function as a oxygen barrier membrane, moisture blocking membrane or a carbon dioxide barrier membrane.

The polymer having barrier characteristics for blocking at least one selected from gas, moisture, and humidity may be, for example, a polymer obtained from the polymerization of polymerizable non-aqueous floating compounds.

The polymerizable non-aqueous floating compound is a material capable of floating on a water surface. The polymerizable non-aqueous floating compound is a polymerizable organic monomer, and the polymerizable non-aqueous floating compound has two or more polymerizable functional groups. The polymerizable organic monomer is non-volatile and has non-aqueous characteristics. Here, polymerization refers to both co-polymerization and cross-linkage. The polymerizable non-aqueous floating compound is , i) one or more of multi-functional monomers selected from a multi-functional acryl monomer and a polyfunctional vinyl monomer, or ii) a mixture of one or more of multi-functional monomers selected from a multi-functional acryl monomer, a polyfunctional vinyl monomer, and a polythiol having three or four thiol groups.

The multi-functional acryl monomer may be one or more selected from diurethane dimethacrylate, trimethylolpropane triacrylate, diurethane diacrylate, trimethylolpropane trimethacrylate, neopentyl glycol diacrylate, 3'-acryloxy-2', 2'-dimethylpropyl 3-acryloxy-2,2-dimethylpropionate, and bisphenol A diacrylate.

Examples of the polyfunctional vinyl monomer include 1,3,5-triallyl-1,3,5-triazine-2,4,6-trione, 3- methacrylpropyl trimethoxysilane, and the like.

The polythiol is one or more selected from pentaerythritol tetrakis(3-mercaptopropionate), trimethylolpropane tris(3-mercaptopropionate), 4-mercaptomethyl-3,6-dithia-1,8-octanedithiol, pentaerythritol tetrakis(2-mercaptoacetate), and trimethylolpropane tris(2-mercaptoacetate).

The organic membrane includes a polymerization product of pentaerythritol tetrakis(3-mercaptopropionate) and 1,3,5-triallyl-1 ,3,5-triazine-2,4,6-trione.

The polymerizable non-aqueous floating compound has solubility in water of about 0.0001 grams per liter (g/l) to about 0.025 g/l. When the polymerizable non-aqueous floating compound is pentaerythritol tetrakis(3-mercaptopropionate), the compound's solubility in water is about 0.00369 g/l, when the polymerizable non-aqueous floatingcompound

is TTT, the compound's solubility in water is about 0.001 g/l, and when it is trimethylolpropane trimethacrylate, the compound's solubility in water is about 0.0201 g/l.

According to another embodiment, the composite membrane may be used as a negative electrode protection layer for a lithium secondary battery, such as a lithium sulfur secondary battery and an aqueous lithium ion secondary battery. Furthermore, the composite membrane may improve the performance of a lithium ion battery by separating electrolytes for a positive electrode and a negative electrode and increase the possibility for its use as a novel material.

When the composite membrane is used as a protection layer for a lithium sulfur secondary battery or an aqueous lithium ion secondary battery, the polymers form a non-ion conductive region.

An amount of polymers in a composite membrane may be about 10 parts by weight to about 80 parts by weight, for example, about 30 parts by weight to about 80 parts by weight, or about 50 parts by weight to about 80 parts by weight, based on a total of 100 parts by weight of the composite membrane. While not wishing to be bound by theory, it is understood that when the amount of the polymers is in the range described above, a composite membrane having excellent lithium ion conductivity, flexibility and gas barrier properties without any reduction in film formability may be obtained.

The polymer has a weight average molecular weight of about 10,000 Daltons to about 300,000 Daltons, for example, about 50,000 Daltons to about 300,000 Daltons. The weight average molecular weight is measured by using gel permeation chromatography (GPC). When the weight average molecular weight is in the ranges described above, a composite membrane having excellent ion conductivity and moisture and gas barrier properties without any reduction in film formability may be obtained.

The composite membrane includes ion conductive inorganic material particles in a highly dense manner, such that the resistance of the composite membrane is very small.

According to an embodiment, the composite membrane has a weight in a range of about 5 milligrams per square centimeter ($mg/cm^2$) to about 20 $mg/cm^2$, for example, about 11 $mg/cm^2$ to about 16 $mg/cm^2$. When the composite membrane is used, a thin-film and lightweight battery may be manufactured.

A thickness of the composite membrane may be about 10 $\mu$m to about 200 $\mu$m, for example, about 70 $\mu$m to about 100 $\mu$m. When the composite membrane has a thickness in the ranges described above, the composite membrane has excellent ion conductivity and moisture and gas barrier properties.

The composite membrane may further include a porous substrate.

The porous substrate may be anything that has excellent mechanical properties and heat resistance, and has porosity therein.

Examples of the porous substrate include an olefin-derived polymer having excellent chemical resistance and hydrophobicity; a sheet, a non-woven fabric, and the like formed of glass fiber or polyethylene, and the like.

Detailed examples of the olefin-derived polymer include polyethylene, polypropylene, or a combination thereof, and a mixed multilayer such as a polyethylene/polypropylene double-layered separator, a polyethylene/polypropylene/polyethylene triple-layered separator, a polypropylene/polyethylene/polypropylene triple-layered separator, and the like.

In more detail, the porous substrate may be a polyethylene film, a polypropylene film or a combination thereof. A pore diameter of the porous substrate may be, for example, about 0.01 $\mu$m to about 10 $\mu$m, and a thickness may be about 5 $\mu$m to about 35 $\mu$m. The porous substrate may include an electrolyte including a lithium salt and an organic solvent.

The lithium salt may be used in a concentration of about 0.01 moles per liter of the solution (molar, M) to about 5 M, for example, about 0.2 M to about 2 M. When the concentration of the lithium salt is in the ranges described above, the composite membrane has excellent conductivity.

The lithium salt may be dissolved in a solvent to act as a source of lithium ions. The lithium salt may be one or more selected from $LiPF_6$, $LiBF_4$, $LiSbF_6$, $LiAsF_6$, $LiN(SO_2C_2F_5)_2$, $Li(CF_3SO_2)_2N$, $LiC_4F_9SO_3$, $LiClO_4$, $LiAlO_2$, $LiAlCl_4$, $LiN(C_xF_{2x+1}SO_2)(C_yF_{2y+1}SO_2)$ (wherein x and y are natural numbers), LiF, LiBr, LiCl, LiOH, LiI, and $LiB(C_2O_4)_2$ (lithium bis(oxalato) borate; LiBOB).

Other metal salts may be added in addition to the lithium salt, for example, $AlCl_3$, $MgCl_2$, NaCl, KCl, NaBr, KBr, and $CaCl_2$ may be added.

The polymerizable non-aqueous floating compound solution may be placed on a water surface, and then 90% of it may be blocked from the resultant using a cover to allow a solvent to be slowly evaporated over an hour. When the resultant is dried at this rate, a composite membrane having a desired contact angle may be manufactured.

Ion conductive particles may be dried at a temperature of about 25°C to about 100°C, for example, at a temperature of about 60°C for a period of 2 hours or less, for example, for 30 minutes before they are spread. After a drying process, an amount of moisture included in ion conductive inorganic particles may be controlled to be 100 parts per million (ppm) or less, for example, in a range of about 0.00001 ppm to about 100 ppm. When such ion conductive inorganic material particles with a controlled amount of moisture are used, a composite membrane having a desired contact angle may be attained.

Hereinafter, a method of manufacturing a composite membrane according to an embodiment will be described.

A first step involves floating on a water surface a mixture including a polymerizable non-aqueous floating compound and a solvent, and ion conductive inorganic material particles on which a hydrophobic coating is formed. The term "floating" denotes placing the mixture on a water suface. The ion conductive inorganic material particles may be hydrophobic particles having a hydrophobic coating formed on at least a portion thereof.

Before placing the ion conductive inorganic material particles on a water surface, the ion conductive inorganic material particles are dried to control an amount of moisture at 100 ppm or less. When the ion conductive inorganic material particles having such an amount of moisture are used, a composite membrane having a desired contact angle may be manufactured.

A drying process for controlling an amount of moisture of the ion conductive inorganic material particles at 100 ppm or less may be performed at about 100°C or less, for example about 30°C to about 60°C under vacuum. Drying time may vary depending on drying temperature, but it may be, for example, performed for 10 hours or less, for example, in a range of about 0.5 hours to about 5 hours.

The solvent may be anything that may dissolve and/or spread the polymerizable non-aqueous floating compound. The solvent may be one or more selected from methanol, ethanol, chloroform, methylene chloride, methyl ethyl ketone, acetonitrile, acetone, formamide, dimethyl formamide, tetrahydrofuran, N-methyl-2-pyrrolidinone, dimethyl sulfoxide, 1,3-dioxolane, sulfolane, dimethyl sulfolane, acetyl acetate, benzene, toluene, 1,2- dichloroethane, and hexane.

An amount of the polymerizable non-aqueous floating compound may be about 10 parts by weight to about 1,000 parts by weight, for example, about 150 parts by weight to about 900 parts by weight, or about 300 parts by weight to about 800 parts by weight, based on 100 parts by weight the ion conductive inorganic material particles. While not wishing to be bound by theory, it is understood that when the amount of the polymerizable non-aqueous floating compound is in the ranges described above, a composite membrane having excellent ion conductivity may be manufactured without any decrease in moisture and gas barrier properties.

After a second step of stirring the mixture including a polymerizable non-aqueous floating compound and the solvent, and ion conductive inorganic material particles floated on a water surface of the first step, a third step of removing a solvent from the stirred resultant of the second step is performed. Thereafter, a fourth step of polymerization by applying heat or light to the resultant from the third step is performed.

During the first step, the sequence of placing the polymerizable non-aqueous floating compound and the ion conductive inorganic material particle on a water surface may be variously changed. For example, the first step may include: i) a floating casting step A, which involves placing a mixture of a polymerizable non-aqueous hydrophobic compound and a solvent on a water surface; ii) a floating casting step B, which involves placing ion conductive inorganic material particles on the resultant of the casting step A by providing ion conductive inorganic material particles having a hydrophobic coating formed on at least a portion thereof on the resultant of the floating casting step A.

For example, the first step may include a floating casting step C, which involves simultaneously placing a monomer mixture including a polymerizable non-aqueous hydrophobic compound and a solvent, and ion conductive inorganic material particles on which a hydrophobic coating is formed on at least a portion thereof on a water surface.

For example, the first step may include a floating casting step D, which involves placing ion conductive inorganic material particles having a hydrophobic coating formed on at least a portion thereof on a water surface, and a floating casting step E, which involves placing a monomer mixture including a polymerizable non-aqueous hydrophobic compound and a solvent on the resultant of floating casting step D.

According to an embodiment, a first step includes:

a-1) a floating casting step A, which involves placing a portion of a mixture including a polymerizable non-aqueous floating compound and a solvent on a water surface;

a-2) a floating casting step B, which involves providing ion conductive inorganic material particles having a hydrophobic coating formed on at least a portion thereof to the resultant of the floating casting step A to place the ion conductive inorganic material particles on the resultant of the floating casting step A;

a-3) a floating casting step C, which involves placing the remaining portion of the mixture of a polymerizable non-aqueous floating compound and a solvent to the resultant of the casting step B. After a first casting of a portion of the polymerizable non-aqueous floating compound on a water surface, ion conductive inorganic material particles having a hydrophobic coating formed thereon are provided to the resultant of the first casting. Thereafter, a second casting of remaining polymerizable non-aqueous floating compound is performed on the water surface. After the processes described above are performed, the polymerizable non-aqueous floating compound and the ion conductive inorganic material particles may be uniformly dispersed and the polymerizable non-aqueous floating compound fills up all of the spaces between the ion conductive inorganic material particles through the capillary force. As a result, a composite membrane having a structure in which ion conductive inorganic material particles having a hydrophobic coating formed thereon are filled in a plurality of through holes in a polymer membrane may be attained. During a first casting step, an amount of the polymerizable non-aqueous floating compound may be in a range of about 30% to about 60%, based on a total amount supplied and during a second casting step, an amount of the

polymerizable non-aqueous compound may be in a range of about 40% to about 70%, based on the total amount of the polymerizable non-aqueous compound required for forming a composite membrane.

During the first step described above, the mixture of the polymerizable non-aqueous floating compound and the solvent and the ion conductive inorganic material particles having the hydrophobic coating formed thereon may be simultaneously placed on a water surface. Alternatively, the mixture may be placed on a water surface before the ion conductive inorganic material particles having the hydrophobic coating formed thereon are placed on a water surface.

FIG. 5 describes the process of preparing a composite membrane according to an embodiment. Referring to FIG. 5, a polymerizable non-aqueous floating compound 54 is placed on a water surface 53, and ion conductive inorganic material particles having a hydrophobic coating formed thereon 51 are placed on the resultant.

A second step which involves stirring the resultant includes an air blowing step). The air blowing step refers to a process of supplying a gas such as air or nitrogen, or an inert gas such as an argon gas. After the process of applying air to the resultant from the first step, a non-aqueous floating compound and ion conductive inorganic material particles casted on the water surface are stirred, such that a composite membrane is formed, which includes a polymer having a plurality of through holes and ion conductive inorganic material particles formed inside the through holes, wherein the ion conductive inorganic material particles are exposed through the surface of the composite membrane and thus, a composite membrane having excellent moisture and gas barrier properties may be attained.

A third step, which involves removing a solvent from the resultant of the second step may be, for example, performed at a temperature range of about room temperature (25°C°C) to about 60°C. When the solvent is removed, the ion conductive inorganic material particle having hydrophobic coating formed thereon are embedded in the thin film of the polymerizable floating compound.

After the solvent is removed, a fourth step, which involves polymerization by applying heat or light is performed. During the fourth step, a polymerization reaction of a polymerizable floating compound is performed.

After the polymerization reaction described above is completed, a finally obtained composite membrane is lifted off from water. The composite membrane 50 has a structure in which a surface modified ion conductive inorganic material particles 51 having a hydrophobic coating are embedded in the polymer membrane 52.

A polymerization initiator may be added to a mixture including a polymerizable non-aqueous floating compound and a solvent. The polymerization initiator may be a photoinitiator, such as a free radical photoinitiator and/or an ionic photoinitiator, or a thermal polymerization initiator.

The photoinitiator may be any compound that may form a radical by using light such as ultraviolet rays, regardless of its composition. A photoinitiator may be benzoin and its derivatives such as benzoin ethyl ether, benzoin isobutyl ether, or benzoin methyl ether; a benzyl ketal; acetophenone and its derivatives such as 2,2-diethoxyacetophenone, 2,2-dimethoxy-2-phenylacetophenone, 4'-ethoxyacetophenone, 3'-hydroxyacetophenone, 4'-hydroxyacetophenone; benzophenone and its derivatives such as 3-hydroxybenzophenone, 4-hydroxybenzophenone, 4'-phenoxyacetophenone; an acylphosphine oxide, such as diphenyl(2,4,6-trimethylbenzoyl)phosphine oxide, but are not limited thereto. In an embodiment, the photoinitiator may be one or more selected from 2-hydroxy-2-methyl-1- phenyl-2-propan-1-one (HMPP), benzoin ether, dialkyl acetophenone, hydroxyl alkylketone, phenyl glyoxylate, benzyl dimethyl ketal, acyl phosphine, and $\alpha$-aminoketone. Meanwhile, detailed examples of acyl phosphine include commercially available lucirin TPO, in other words, 2,4,6-trimethyl-benzoyl-trimethyl phosphine oxide.

Also, the thermal initiator may be an azo compound such as 4,4-azobis(4-cyanovaleric acid), 1,1'-azobis(cyclohexanecarbonitrile), or 2,2'-azobisisobutyronitrile (AIBN); an inorganic peroxide such as ammonium persulfate, hydroxymethanesulfinic acid monosodium salt dehydrate, and sodium or potassium persulfate; and an organic peroxide such as benzoyl peroxide, 2,2-bis(tert-butylperoxy)butane, 1,1-bis(tert-butylperoxy)cyclohexane, 2,5-bis(tert-butylperoxy)-2,5-dimethylhexane, 2,5-bis(tert-butylperoxy)- 2,5-dimethyl-3-hexyne, bis(1-(tert-butylperoxy)-1 -methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4-pentanedione peroxide, and peracetic acid, but is not limited thereto. In an embodiment, the thermal polymerization initiator may be one or more selected from an initiator group of a persulfate initiator, an azo initiator, peroxide, and ascorbic acid. For example, the persulfate initiator may be sodium persulfate ($Na_2S_2O_8$), potassium persulfate ($K_2S_2O_8$), ammonium persulfate ($(NH_4)_2S_2O_8$), and the like, and the azo initiator may be 2,2-azobis(2-amidinopropane) dihydrochloride, 2,2-azobis-(N, N-dimethylene)isobutyramidine dihydrochloride), 2-(carbamoylazo)iso-butyronitrile), 2,2-azobis[2-(2-imidazolin-2-yl)propane] dihydrochloride), 4,4-azobis-(4-cyanovaleric acid), and the like.

The polymerization initiator may be added in an amount of about 0.005 parts by weight to about 10 parts by weight, for example, about 0.05 parts by weight to about 10 parts by weight, based on 100 parts by weight of the polymerizable floating compound. While not wishing to be bound by theory, it is understood that when the amount of the polymerization initiator is in the ranges described above, the reactivity of the polymerization reaction of the polymerizable floating compound is excellent.

The light may be ultraviolet rays (UV). When such light is used to perform a polymerization reaction to form a composite membrane on a lithium metal, thin film modification of the lithium metal thin film caused by heat may be prevented. Here, an electrolyte may be formed between the composite membrane and the lithium metal thin film.

A period of time for performing a polymerization (cross-linking) reaction may vary, for example, it may last about 1 minute to 30 minutes.

When heat is applied, a heat treatment may vary depending on the type of the polymerizable floating compound, for example, it may be performed at a temperature of about 60°C to about 200°C. Alternatively, the heat treatment may be performed at a temperature of about 60°C to about 100°C.

The ion conductive inorganic material particle having hydrophobic coating formed on at least a portion thereof may be prepared from b-1) a reaction between an ion conductive inorganic material particle and a compound represented by Formula 1 below to produce a reaction product, and b-2) washing and drying the reaction product.

Formula 1

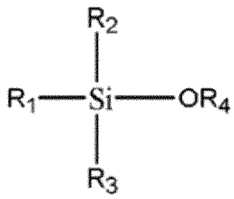

In Formula 1,

$R_1$ through $R_3$ may be each independently a substituted or unsubstituted C1-C20 alkyl group, a substituted or unsubstituted C1-C20 alkoxy group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C6-C20 aryloxy group, a substituted or unsubstituted C2-C20 heteroaryl group, a substituted or unsubstituted C2-C20 heteroaryloxy group, a substituted or unsubstituted C3-C20 heteroarylalkyl group, a substituted or unsubstituted C2-C20 heterocyclic group, or halogen atom, and

$R_4$ may be a hydrogen, a substituted or unsubstituted C1-C20 alkyl group, or a substituted or unsubstituted C6-C20 aryl group.

The ion conductive inorganic material particle used in step b-1) passes through grinding and sieving processes such that its average diameter is about 1 μm to about 300 μm, for example, about 1 μm to about 200 μm, for example, about 1 μm to about 100 μm.

The size of the ion conductive inorganic material particle is a very important factor in the ion conductivity of the composite membrane. Accordingly, the size of the ion conductive inorganic material particle may be suitably controlled to produce particles in a uniform state. For this, only those ion conductive inorganic material particles having a desired uniform diameter collected through sieving may be used.

The average diameter of the ion conductive inorganic material particle may be about 1 μm to about 300 μm, for example, about 1 μm to about 200 μm, for example, about 1 μm to about 100 μm. According to an embodiment, an average diameter of the ion conductive inorganic material particle may be about 90 μm to about 200 μm, for example, about 90 μm to about 100 μm.

According to an embodiment, the ion conductive inorganic material particle may be ground to the extent that an average diameter of the ion conductive inorganic material particle is in a range of about 1 μm to about 300 μm and then classifying the particles before reacting with a compound of Formula 1.

Bead mill or the like is used for the grinding process. Beads are used for the grinding process, wherein a diameter of the beads is, for example, about 0.5 mm to about 2 mm, and a number of the revolution per minute of a grinder is, for example, about 1,000 revolutions per minute (rpm) to about 2,000 rpm. When the diameter of the beads and the number of the revolution per minute of the grinder is within the ranges described above, particle size reduction of LTAP may be prevented.

Non-limiting examples of materials for the beads include zirconia beads and alumina beads.

A reaction between the ion conductive inorganic material particle and the compound represented by Formula 1 above may be performed by an impregnation method, a spray method, a ball mill method, and the like.

According to an embodiment, a step for reacting the ion conductive inorganic material particle and the compound represented by Formula 1 above may be performed by an impregnation method, which involves mixing a composition including the ion conductive inorganic material particle, the compound represented by Formula 1 above, and a solvent at a temperature in a range of room temperature (25°C) to about 60°C and then removing the solvent therefrom. The method of mixing is not particularly critical and may be carried out by a variety of means, for example dispersion, blending,

stirring, sonication, sparging, milling, shaking, centrifugal circulating pump mixing, blade mixing, impact mixing, jet mixing, homogenization, co-spraying, high sheer mixing, single pass and multi-pass mixing, and the like.

A step for reacting the ion conductive inorganic material particle and the compound represented by Formula 1 above may be, for example, performed for about 20 hours or less, for example, for about 3 hours to about 10 hours.

According to another embodiment, the reaction between the ion conductive inorganic material particle and the compound represented by Formula 1 above may be performed by a method, which involves spraying a composition including the compound represented by Formula 1 above and the solvent on a surface of the ion conductive inorganic material particle and then mixing the same.

When the impregnation method and the spray method are used, the solvent may be anything that can uniformly mix or disperse the ion conductive inorganic material particle and the compound represented by Formula 1 above. For example, the solvent may be one or more solvents selected from toluene, methylene chloride, methanol, ethanol, propanol, ethyl acetate, diethyl ether.

A step for washing the reaction product may be performed by using a solvent such as acetone and the like. Also, a step for drying the reaction product may be performed at about room temperature (25°C) to about 85°C.

According to the processes described above, the ion conductive inorganic material particle having a hydrophobic coating formed on at least a portion thereof is attained. The ion conductive inorganic material particle has hydrophobicity, and a hydrophobic coating has a continuous or discontinuous coating and its thickness is, for example, about 1 nm to about 100 nm, or about 5 nm to about 90 nm. As a result, since the thickness of the hydrophobic coating is very low relative to a total thickness of the composite membrane, such that even if a hydrophobic coating is formed on the surface of the ion conductive inorganic material particle, a reduction in ion conductivity due to the formation of the hydrophobic coating does not occur.

A thickness of the hydrophobic coating may be about 1 nm to about 80 nm, for example, about 1 nm to about 50 nm, for example, about 1 nm to about 15 nm. According to an embodiment, a thickness of the hydrophobic coating may be about 1 nm to about 10 nm.

A thickness of the composite membrane may be about 10 $\mu$m to about 200 $\mu$m, for example, about 70 $\mu$m to about 100 $\mu$m.

The composite membrane is a lithium ion conductive membrane that may function as a protection layer which protects a negative electrode capable of intercalation and deintercalation of lithium ions and selectively allows the permeation of lithium ions and blocks other materials from reacting with the negative electrode. Also, the protection layer has reduced resistance and improved ion conductivity due to its formation as a thin film.

The composite membrane may be used as a protection layer or an oxygen barrier membrane of a lithium air battery, a protection layer of a lithium sulfur battery, a protection layer and a separator of an aqueous lithium ion battery, a separator for a fuel battery, and the like.

According to another embodiment, provided is a negative electrode structure including a negative electrode and the composite membrane described above.

The negative electrode structure may further include an electrolyte between the negative electrode and the composite membrane.

FIG. 3A is a schematic view of a structure of a negative electrode structure according to an embodiment.

Referring to FIG. 3A, a negative electrode structure 300 has a structure in which an electrolyte 320 is disposed between a negative electrode 310 and a composite membrane 330. Here, the electrolyte 320 may be omitted.

The negative electrode 310 may be, for example, a lithium metal thin film and the composite membrane may function as a lithium metal protection layer. The composite membrane is flexible and lightweight and has excellent oxygen barrier properties.

The electrolyte may be an aqueous electrolyte or a non-aqueous electrolyte. The electrolyte may be identical to an electrolyte used for manufacturing a lithium air battery described below.

According to another embodiment, provided is a lithium secondary battery including the composite membrane described above.

The lithium secondary battery may be, for example, a lithium air battery. The lithium air battery includes a negative electrode, a composite membrane, and a positive electrode using oxygen as a positive electrode active material.

The lithium air battery may include an aqueous electrolyte or a non-aqueous electrolyte as an electrolyte disposed between the positive electrode and the negative electrode.

When a non-aqueous electrolyte used as the electrolyte, it may show a reaction mechanism as shown in a Reaction Scheme 1 below.

Reaction Scheme 1 $$4Li + O_2 \rightarrow 2Li_2O \quad E°=2.91\ V \quad 2Li + O_2 \rightarrow Li_2O_2 \quad E°=3.10\ V$$

During a discharge process, lithium derived from the negative electrode contact oxygen introduced from the positive electrode to produce a lithium oxide and oxygen is reduced. Also, during a charge process, lithium oxide is

reduced.

The lithium air battery may have any of various shapes, and in some embodiments, may have a shape like a coin, a button, a sheet, a stack, a cylinder, a plane, or a horn. The lithium air battery may be used as a large-scale battery for electric vehicles.

FIG. 3B is a schematic view of a lithium air battery according to an embodiment.

A lithium air battery 30 has a structure in which a composite membrane 35 according to an embodiment is disposed between a positive electrode 37 including oxygen as an active material and a negative electrode 33 formed on a substrate 32. An electrolyte 34 may be disposed between the negative electrode 33 and the composite membrane 35. The negative electrode 33, the electrolyte 34, and the composite membrane 35 form a protection negative electrode.

The electrolyte 34 has excellent lithium ion conductivity and a small resistance area when it combines with the negative electrode 33.

A lithium ion conductive solid electrolyte membrane or a separator may be further added between the negative electrode 33 and the electrolyte 34 or between the electrolyte 34 and the composite membrane 35.

The positive electrode 37 includes a current collector, and a pressing member 39 that can transport air to the positive electrode 37 is disposed on the current collector. As shown in FIG. 3B, a case 31 formed of an insulating resin material and which encloses the positive electrode 37 and the negative electrode 33 is disposed on the substrate 32 so as to accommodate the positive electrode 37 and the negative electrode 33. Also, air is supplied to an air inlet 38a and then discharged through an air outlet 38b.

As used herein, the term "air" is not limited to atmospheric air, and may refer to a combination of any gases including oxygen, or pure oxygen gases.

An electrolyte 36 is disposed between the composite membrane 35 and the positive electrode 37.

A lithium ion conductive solid electrolyte membrane or a separator may be further disposed between the positive electrode 37 and the electrolyte 36 or between the electrolyte 36 and the composite membrane 35.

The composite membrane 35 is formed on a surface of the negative electrode 33 to function as a protection layer protecting lithium in the negative electrode 33 from the electrolyte 34. The composite membrane 35 may be used as a single-layered or a multi-layered membrane.

A solid polymer electrolyte may be used as the electrolytes 34 and 36. The solid polymer electrolyte may be polyethylene oxide doped with a lithium salt. Examples of the lithium salt include $LiBF_4$, $LiPF_6$, $LiSbF_6$, $LiAsF_6$, $LiC10_4$, $LiCF_3SO_3$, $LiN(SO_2CF_3)_2$, $LiN(SO_2F)_2$, $LiN(SO_2C_2F_5)_2$, $LiC(SO_2CF_3)_3$, $LiN(SO_3CF_3)_2$, $LiC_4F_9SO_3$, and $LiAlCl_4$.

According to another embodiment, the electrolytes 34 and 36 may be a liquid electrolyte including a solvent and a lithium salt.

A solvent may include one or more selected from an aprotic solvent and water.

The aprotic solvent may be a carbonate solvent, an ester solvent, an ether solvent, a ketone solvent, an amine solvent, or a phosphine solvent.

The carbonate solvent may be dimethyl carbonate (DMC), diethyl carbonate (DEC), ethylmethyl carbonate (EMC), dipropyl carbonate (DPC), methylpropyl carbonate (MPC), ethylpropyl carbonate (EPC), ethylene carbonate (EC), propylene carbonate (PC), or butylene carbonate (BC).

The ester solvent may be methyl acetate, ethyl acetate, n-propyl acetate, tert-butyl acetate, methyl propionate, ethyl propionate, $\gamma$-butyrolactone, decanolide, valerolactone, mevalonolactone, or caprolactone.

The ether solvent may be diethyl ether, dibutyl ether, methyl butyl ether, tetraglyme, diglyme, dimethoxyethane, 2-methyltetrahydrofuran, or tetrahydrofuran.

The ketone solvent may be cyclohexanone.

Also, the amine solvent may be triethylamine or triphenylamine. The phosphine solvent may be triethylphosphine. However, the solvents are not limited thereto, and any aprotic solvent available in the art may be used.

Also, the aprotic solvent may be one of nitriles such as R-CN (wherein R may be a C2 to C20 linear, branched, or cyclic hydrocarbon group, and may include a double bond, an aromatic ring, or an ether bond), one of amides such as dimethylformamide, one of dioxolanes such as 1,3-dioxolane, or one of sulfolanes.

The aprotic solvent may be used alone or in a mixture with any other solvent. When the organic solvent is used in a mixture, the mixture ratio may be appropriately selected in accordance with battery performance, and this is apparent to one of ordinary skill in the art.

Also, the electrolytes 34 and 36 may include an ionic liquid.

The ionic liquid may include a compound constituted of one cation selected from a linear or branch substituted ammonium cation, a linear or branch substituted imidazolium cation, a linear or branch substituted pyrrolidinium cation, and a linear or branch substituted piperidinium cation, and one anion selected from $PF_6^-$, $BF_4^-$, $CF_3SO_3^-$, $(CF_3SO_2)_2N^-$, $(C_2F_5SO_2)_2N^-$, $(FSO_2)_2N^-$, and $(CN)_2N^-$.

A part of or the whole electrolytes 34 and 36 may be impregnated in the positive electrode or the negative electrode.

According to another embodiment, a lithium ion conductive solid electrolyte membrane may be used as the

electrolytes 34 and 36.

The lithium ion conductive solid electrolyte membrane may be an inorganic material containing a lithium ion conductive glass, a lithium ion conductive crystal (ceramic or glass-ceramic), or a combination thereof. As far as chemical stability is concerned, the lithium ion conductive solid electrolyte membrane may be an oxide.

When the lithium ion conductive solid electrolyte membrane includes a massive amount of the lithium ion conductive crystal, a high ionic conductivity may be obtained, and thus, for example, the lithium ion conductive crystal may be included at an amount of 50 percent by weight (wt%) or greater, 55 wt% or greater, or 60 wt% or greater, based on a total weight of the lithium ion conductive solid electrolyte.

Examples of the lithium ion conductive crystal may include a lithium ion conductive crystal having a perovskite structure, such as $Li_3N$, LISICON, or $La_{0.55}Li_{0.35}TiO_3$, $LiTi_2P_3O_{12}$ having a NASICON-type structure, or a glass-ceramic for precipitating these crystals.

The lithium-ion conductive crystal may be, for example, $Li_{1+x+y}(Al, Ga)_x(Ti, Ge)_{2-x}Si_yP_{3-y}O_{12}$ (wherein $0 \le x \le 1$ and $0 \le y \le 1$, for example, $0 \le x \le 0.4$ and $0 < y \le 0.6$, or $0.1 \le x \le 0.3$ and $0.1 < y \le 0.4$). To attain high ion conductivity, the lithium-ion conductive crystal may not include a grain boundary that interrupts ion conduction. For example, since a glass-ceramic may rarely include a pore or a grain boundary that interrupts ion conduction, high ion conductivity and excellent chemical stability may be attained.

Examples of the lithium ion conductive glass-ceramic include lithium-aluminum-germanium-phosphate (LAGP), lithium-aluminum-titanium-phosphate (LATP), and lithium-aluminum-titanium-silicon-phosphate (LATSP).

For example, when a mother glass including a composite of $Li_2O$-$Al_2O_3$-$TiO_2$-$SiO_2$-$P_2O_5$ is heat-treated for crystallization, a main crystal phase of $Li_{1+x+y}Al_xTi_{2-x}Si_yP_{3-y}O_{12}$ (wherein $0 \le x \le 2$ and $0 \le y \le 3$) may be obtained, wherein x and y satisfy, for example, $0 \le x \le 0.4$ and $0 < y \le 0.6$, or $0.1 \le x \le 0.3$ and $0.1 < y \le 0.4$.

As used herein, a pore or a grain boundary that interrupts ion conduction refers to an ion conduction inhibitor, such as a pore or a grain boundary that reduces the total ion conductivity of an inorganic material including lithium ion conductive crystals to 1/10 or less of the ion conductivity of the lithium ion conductive crystals themselves.

Meanwhile, a conductive material may be used as a positive electrode using oxygen as a positive electrode active material. The conductive material may be porous. Thus, any positive electrode that is porous and conductive may be used, and, for example, a porous carbon-containing material may be used. Examples of the carbon-containing material may be carbon blacks, graphites, graphenes, activated carbons, and carbon fibers.

Also, the positive electrode may be a metallic conductive material, such as a metal fiber or a metal mesh. Also, the positive electrode may be a metallic powder of copper, silver, nickel, or aluminum. The positive electrode may be an organic conductive material, such as a polyphenylene derivative. The conductive material may be used alone or in a combination with any other material.

A catalyst for redox reactions of oxygen may be added to the positive electrode. Examples of the catalyst include precious metal-containing catalysts, such as platinum (Pt), gold (Au), silver (Ag), palladium (Pd), ruthenium (Ru), rhodium (Rh), and osmium (Os); oxide-containing catalysts, such as manganese oxides, iron oxides, cobalt oxides, and nickel oxides; and organic metal-containing catalysts, such as cobalt phthalocyanines, but are not limited thereto. Any appropriate catalyst for redox reactions of oxygen available in the art may be used.

The catalyst may be deposited on a support. Examples of the support include oxide, zeolite, clay mineral, and carbon. The oxide may include at least one oxide of alumina, silica, zirconium oxide, and titanium dioxide. The oxide may be an oxide bearing one or more metals selected from cerium (Ce), praseodymium (Pr), samarium (Sm), europium (Eu), terbium (Tb), thulium (Tm), ytterbium (Yb), antimony (Sb), bismuth (Bi), vanadium (V), chromium (Cr), manganese (Mn), iron (Fe), cobalt (Co), nickel (Ni), copper (Cu), niobium (Nb), molybdenum (Mo), and tungsten (W). Examples of the carbon available as the support include, but are not limited to, carbon blacks, such as ketjen black, acetylene black, channel black, and lamp black; graphites, such as natural graphite, artificial graphite, and expanded graphite; activated carbons; and carbon fibers. Any appropriate material available as supports in the art may be used.

The positive electrode may further include a binder. The binder may include a thermoplastic polymer or a thermocurable polymer. The thermoplastic polymer may be a reactive ethylene terpolymer (RET, a reactive terpolymer of ethylene, butyl acrylate, and glycidyl methacrylate), acrylonitrile butadiene-styrene copolymer (ABS), polymethyl methacrylate (PMMA), methyl pentene polymer (poly(4-methyl-1-pentene), MPP), polyimide (PI), polyetherimide (PEI), polyvinylidene fluoride (PVDF), polyvinylidene chloride (PVDC), polycarbonate (PC), polystyrene (PS), nylon (polyamide, PA), polyethylene terephthalate (PETP), polyphenylene oxide (PPO), polyvinyl chloride (PVC), celluloid polymer, cellulose acetate, cyclic olefin copolymer (COC), ethylene vinyl acetate (EVA), ethylene vinyl alcohol, (EVOH), fluoropolymers (such as polytetrafluoroethylene PTFE, fluorinated ethylene propylene FEP, perfluoroalkoxy PFA, chlorotrifluoroethylene CTFE, ethylene chlorotrifluoroethylene ECTFE, and ethylene tetrafluoroethylene ETFE), liquid crystal polymer (LCP), polyoxymethylene (POM), polyacrylates, polyacrylonitrile (PAN), polyamide imide (PAI), polyaryletherketone (PAEK), polybutadiene (PBD), polybutylene (PB), polybutylene terephthalate (PBT), polycyclohexylene dimethylene terephthalate (PCT), polyhydroxylalkanoates (PHAs), polyketone (PK), polyester, polyethylene (PE), polyetheretherketone (PEEK), polyetherketoneketone (PEKK), polyethersulfone (PES), chlorinated polyethylene (CPE), polylactic acid (PLA),

polyphenylene sulfide (PPS), polyphthalamide (PPA), polypropylene (PP), polysulfone (PSU), polytrimethylene terephthalate (PTT), polyurethane (PU), polyvinyl acetate (PVA), polyvinylidene chloride (PVDC), styrene acrylonitrile (SAN), or any other commonly known thermoplastic polymer. The thermocurable polymer may be a reactive polydimethylsiloxane (PDMS) formulation, for example a two-part formulation containing a PDMS with terminal vinyl reactive groups and a PDMS with terminal methylhydrogen groups , a perfluoropolyether such as Fluorolink (trade name FLK MD700), polyurethane (PUR), reactive polyester, unsaturated polyester (UP), polyacrylate, polymethacrylate, phenolics (PF), alkyd molding compound (ALK), allylics (allyl resin) (DAP), epoxy resin (EP), vulcanized rubber, bakelite, duroplast, urea-formaldehyde foam, melamine resin, or other commonly known polymers. In an embodiment, examples of the binder include, but are not limited to, polyethylene, polypropylene, polytetrafluoroethylene (PTFE), polyvinylidene fluoride (PVDF), styrene-butadiene rubber, a tetrafluoroethylene-perfluoroalkyl vinyl ether copolymer, a vinylidene fluoride-hexafluoropropylene copolymer, a vinylidene fluoride-chlorotrifluoroethylene copolymer, an ethylene-tetrafluoroethylene copolymer, polychlorotrifluoroethylene, a fluorovinylidene-pentafluoro propylene copolymer, a propylene-tetrafluoroethylene copolymer, an ethylene-chlorotrifluoroethylene copolymer, a vinylidene fluoride-hexafluoropropylene-tetrafluoroethylene copolymer, a vinylidene fluoride-perfluoromethyl vinyl ether-tetrafluoroethylene copolymer, and an ethylene-acrylic acid copolymer, which may be used alone or in a combination with any other copolymer. Any appropriate binder available in the art may be used.

To manufacture the positive electrode, the redox catalyst for oxygen, a conducting agent, and a binder may be mixed, and then may be added to an appropriate solvent to prepare a positive electrode slurry. The positive electrode slurry may be coated and dried on a surface of a current collector, optionally followed by press-molding to improve an electrode density, thereby resulting in the positive electrode. The positive electrode may optionally include a lithium oxide. The redox catalyst for oxygen may be optionally omitted.

A porous body in a matrix or mesh form may be used as the current collector to facilitate diffusion of oxygen. A porous metal plate made of, for example, stainless steel, nickel, or aluminum may be used, but materials for the current collector are not particularly limited, and any appropriate material for current collectors available in the art may be used. The current collector may be coated with an anti-oxidation metal or alloy film to prevent oxidation.

The negative electrode in the lithium air battery may be an electrode containing Li metal, Li metal alloy, or a material capable of intercalating and deintercalating Li, but it is not particularly limited and any appropriate electrode available in the art containing lithium or capable of intercalating and deintercalating lithium may be used. The negative electrode determines the capacity of the lithium air battery.

The negative electrode may be, for example, a lithium metal thin film. Examples of the lithium alloy may be an alloy of lithium and at least one metal selected from aluminum, tin, magnesium, indium, calcium, titanium, vanadium, and the like.

Also, a separator may be disposed between the positive electrode and the negative electrode. The separator is not particularly limited as long as it has any appropriate composition and is durable in a lithium air battery. Examples of the separator may be a non-woven fabric such as a polypropylene material, a polymer non-woven fabric such as a polyphenylene sulfide material, a porous film made of an olefin resin such as polyethylene or polypropylene, or a combination of at least two thereof.

A lithium air battery according to an embodiment includes the composite membrane described above and has improved specific capacity and lifespan.

A lithium secondary battery according to an embodiment may be, for example a lithium sulfur secondary battery, or a lithium ion secondary battery.

A lithium secondary battery including the composite membrane as a lithium metal protection layer is as shown in FIG. 3C.

Referring to FIG. 3C, the lithium secondary battery 61 includes a positive electrode 63, a negative electrode 62, and a separator 64. The positive electrode 63, the negative electrode 62, and the separator 64 may be wound or folded and then enclosed in a battery case 65. Thereafter, an organic electrolyte is injected into the battery 65, which is then sealed with a cap assembly 66 to complete the lithium secondary battery 61.

The battery may be cylindrical as shown in FIG. 3C, rectangular, or a thin film. For example, the lithium secondary battery may be a thin film battery.

When the separator 64 is disposed between the positive electrode 63 and the negative electrode 62 to form a battery structure, which layered into a bicell structure, immersed in an organic electrolyte, and then a product obtained therefrom is inserted into a pouch, a pouch-type of lithium ion battery is manufactured.

The polymer included in the composite membrane may be any polymer that may protect the lithium negative electrode.

As a negative electrode active material of a negative electrode in a lithium sulfur secondary battery, a carbon-containing material that can reversibly intercalate and deintercalate the lithium ions, materials that react with the lithium ions to reversibly form lithium-containing compounds, and a lithium alloy may be used..

The carbon-containing material may be any carbon-containing negative electrode active material that is generally used in a lithium sulfur secondary battery. Representative examples of the carbon-containing material include crystalline carbon, amorphous carbon, or they may be used together. Also, representative examples of materials that react with the lithium ions to reversibly form lithium-containing compounds include tin oxide ($SnO_2$), titanium nitrate, silicon (Si), and the like, but they are not limited thereto. A lithium alloy may be any alloy of lithium and a metal selected from sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn) may be used.

In a lithium sulfur secondary battery, an elemental sulfur ($S_8$), a sulfur atom containing compound, or a combination thereof is used as a positive electrode active material of a positive electrode, and as a sulfur-containing compound, one or more selected from $Li_2S_n$ (wherein n≥1), $Li_2S_n$ (wherein n≥1) dissolved in a catholyte, an organic sulfur compound, and a carbon-sulfur polymer ($(C_2S_x)_n$: x= 2.5 to 50, wherein n≥2) may be used.

As a positive electrode active material of a positive electrode in a lithium ion secondary battery, a compound capable of reversible intercalation and deintercalation of Li (a lithiated intercalation compound) may be used. As the positive electrode active material, one or more selected from lithium cobalt oxide, lithium nickel cobalt manganese oxide, lithium nickel cobalt aluminum oxide, lithium iron phosphate, and lithium manganese oxide, but it is not limited thereto and any positive electrode active material used in the art may be used.

The positive electrode active material may be one or more selected from lithium cobalt oxide of $LiCoO_2$; lithium nickel oxide of Formula $LiNiO_2$; lithium manganese oxide having Formula $Li_{1+x}Mn_{2-x}O_4$ (wherein x may be from 0 to 0.33), $LiMnO_3$, $LiMn_2O_3$, or $LiMnO_2$; lithium copper oxide of Formula $Li_2CuO_2$; lithium iron oxide of Formula $LiFe_3O_4$; lithium vanadium oxide of Formula $LiV_3O_8$; copper vanadium oxide of Formula $Cu_2V_2O_7$; vanadium oxide of Formula $V_2O_5$; lithium nickel oxide of Formula $LiNi_{1-x}M_xO_2$ (wherein M = cobalt (Co), manganese (Mn), Al, copper (Cu), Fe, Mg, boron (B), or gallium (Ga), and x = from 0.01 to 0.3); lithium manganese composite oxide of Formula $LiMn_{2-x}M_xO_2$ (wherein M = Co, nickel (Ni), Fe, chromium (Cr), zinc (Zn), or tantalum (Ta), and x = from 0.01 to 0.1), or $Li_2Mn_3MO_8$ (wherein M= Fe, Co, Ni, Cu, or Zn); lithium manganese oxide in which a portion of Li in Formula $LiMn_2O_4$ is substituted with alkaline earth metal ions; a disulfide compound; and iron molybdenum oxide of Formula $Fe_2(MoO_4)_3$.

As the negativeelectrode active material, a carbon-containing material, silicon, silicon oxide, silicon-containing alloy, a silicon-carbon-containing material composite, tin, tin-containing alloy, a tin-carbon composite material, metal oxide, or a combination thereof may be used.

The carbon-containing material includes carbon, graphite, or carbon nanotubes.

A negative electrode active material of a negative electrode in a lithium ion secondary battery may be selected from Si, $SiO_x$ (wherein $0 < x < 2$, for example, 0.5 to 1.5), Sn, $SnO_2$, a silicon-containing metal alloy, and a combination thereof. A metal capable of forming silicon-containing metal alloy may be one or more selected from aluminum (Al), Sn, silver (Ag), Fe, bismuth (Bi), Mg, Zn, In, germanium (Ge), lead (Pb), and Ti.

The negative electrode active material may include a metal/metalloid alloyable with lithium, alloy thereof or oxide thereof. For example, the metal/metalloid alloyable with lithium, alloy thereof or oxide thereof may be Si, Sn, Al, Ge, Pb, Bi, or SbSi-Y alloy (wherein Y is an alkali metal, an alkaline earth metal, a Group 13 to Group 16 element, a transition metal, a rare earth element, or a combination thereof, but not Si), Sn-Y alloy (wherein Y is an alkali metal, an alkaline earth metal, a Group 13 to Group 16 element, a transition metal, a rare earth element, or a combination thereof, but not Sn), $MnO_x$ (wherein $0 < x \leq 2$), or the like. The element Y may be Mg, Ca, Sr, Ba, Ra, scandium (Sc), yttrium (Y), Ti, zirconium (Zr), hafnium (Hf), rutherfordium (Rf), V, Nb, Ta, dubnium (Db), Cr, Mo, W, seaborgium (Sg), technitium (Tc), rhenium (Re), bohrium (Bh), Fe, Pb, Ru, osmium (Os), hassium (Hs), rhodium (Rh), iridium (Ir), palladium (Pd), plutonium (Pt), Cu, Ag, gold (Au), Zn, cadmium (Cd), B, Al, Ga, Sn, In, Ti, Ge, phosphorus (P), arsenic (As), antimony (Sb), Bi, sulfur (S), selenium (Se), tellurium (Te), polonium (Po), or a combination thereof. For example, an oxide of the metal/metalloid alloyable with lithium may be lithium titanium oxide, vanadium oxide, lithium vanadium oxide, $SnO_2$, $SiO_x$ (wherein $0<x<2$), and the like.

For example, the negative electrode active material may include one or more elements selected from a Group 13 element, a Group 14 element, and a Group 15 element of the periodic table of the elements.

For example, the negative electrode active material may include one or more elements selected from Si, Ge, and Sn.

The negative electrode active material may be one selected from Si, Si oxide, and Si-containing metal alloy described above, one selected from a mixture of carbon-containing material, or a mixture of Si, Si oxide, or Si-containing metal alloy, and a carbon-containing material.

For example, the negative electrode active material may have a simple particle form or may be in the form of nanostructures having a nano-sized shape. For example, the negative electrode active material may have various shapes such as nanoparticles, nanowires, nanorods, nanotubes, nanobelts, and the like.

As a separator disposed between the positive electrode and the negative electrode, a mixed multi-layered membrane such as a polyethylene/polypropylene double-layered separator, a polyethylene/polypropylene/polyethylene triple-layered separator, a polypropylene/polyethylene/polypropylene triple-layered separator, and the like may be used.

An electrolyte used in the lithium secondary battery includes an organic solvent and a lithium salt.

The organic solvent may be one or more solvent selected from benzene, fluorobenzene, toluene, dimethyl formamide, t-butyl acetatetrifluorotoluene, xylene, cyclohexane, tetrahydrofuran, 2-methyltetrahydrofuran, cyclohexanone, ethanol, isopropyl alcohol, dimethyl carbonate, ethylmethyl carbonate, diethyl carbonate, methylpropyl carbonate, methylpropionate, ethylpropionate, methyl acetate, ethyl acetate, propyl acetate, dimethoxy ethane, 1,3-dioxolane, diglyme, tetraglyme, ethylene carbonate, propylene carbonate, $\gamma$- butyrolactone and sulfolane.

The lithium salt may be one or more lithium salts selected from lithium hexafluorophosphate ($LiPF_6$), lithium tetrafluoroborate ($LiBF_4$), lithium hexafluoroarsenate ($LiAsF_6$), lithium perchlorate ($LiClO_4$), lithium trifluoromethane sulfonyl ($LiSO_3CF_3$), lithium bis (trifluoromethylsulfonyl) imide ($LiN(SO_2CF_3)_2$), lithium bis (perfluoroethyl sulfonyl) imide ($LiN(SO_2C_2F_5)_2$).

In the electrolyte described above, a concentration of the lithium salt may be, for example, about 0.01 M to about 5 M, for example, about 0.1 M to about 2.0 M.

The lithium secondary battery such as the lithium sulfur secondary battery and the lithium ion secondary battery described above protects the lithium negative electrode to inhibit side reactions between the lithium negative electrode and the electrolyte and improve the conductivity of lithium ions and thus, the lithium secondary battery has improved conductivity and lifespan characteristics.

The substituents used in the Formulae above will be described in further detail below.

The term "alkyl" as used in the Formulae refers to a group derived from a fully saturated branched or unbranched (a straight chain or a linear chain) hydrocarbon group.

Non-limiting examples of the "alkyl" are methyl, ethyl, n-propyl, iso-propyl, n-butyl, iso-butyl, sec-butyl, n-pentyl, iso-pentyl, neo-pentyl, n-hexyl, 3-methylhexyl, 2,2-dimethylpentyl, 2,3-dimethylpentyl, n-heptyl, and the like.

One or more hydrogen atoms in the "alkyl" may be substituted with a halogen atom, a C1-C20 alkyl group substituted with a halogen atom (for example, $CF_3$, $CHF_2$, $CH_2F$, $CCl_3$, and the like), a C1-C20 alkoxy group, a C2-C20 alkoxyalkyl, a hydroxyl group, a nitro group, a cyano group, an amino group, an amidino group, a hydrazine group, a hydrazone group, a carboxyl group or a salt thereof, a sulfonyl group, a sulfamoyl group, a sulfonic acid group or a salt thereof, phosphoric acid group or a salt thereof, or a C1-C20 alkyl group, a C2-C20 alkenyl group, a C2-C20 alkynyl group, a C1-C20 heteroalkyl group, a C6-C20 aryl group, a C7-C20 arylalkyl group, a C6-C20 heteroaryl group, a C7-C20 heteroarylalkyl group, a C6-C20 heteroaryloxy group, a C6-C20 heteroaryloxyalkyl group, or a C6-C20 heteroarylalkyl group.

When a group containing a specified number of carbon atoms is substituted with any of the groups listed in the preceding paragraph, the number of carbon atoms in the resulting "substituted" group is defined as the sum of the carbon atoms contained in the original (unsubstituted) group and the carbon atoms (if any) contained in the substituent. For example, when the term "substituted C1-C20 alkyl" refers to a C1-C20 alkyl group substituted with C6-C20 aryl group, the total number of carbon atoms in the resulting aryl substituted alkyl group is C7-C40.

The phrase "halogen atom" includes fluorine, bromine, chlorine, and iodine.

The expression "a C1-C20 alkyl group substituted with a halogen atom" refers to a C1-C20 alkyl group in which one or more hydrogen atoms are substituted with halo groups, and its non-limiting examples include monohaloalkyl and a polyhaloalkyl group, which includes a monohaloalkyl group, a dihaloalkyl group, or a perhaloalkyl group.

A monohaloalkyl is an alkyl group in which one hydrogen atom is substituted with an iodine atom, a bromine atom, a chlorine atom, or a fluorine atom, and a dihaloalkyl and a polyhaloalkyl are alkyl groups having two or more of identical or different halogen atoms.

The term "alkoxy" as used in the Formulae refers to an alkyl-O-, wherein the alkyl is as described above. Non-limiting examples of the alkoxy include methoxy, ethoxy, propoxy, 2-propoxy, butoxy, tert-butoxy, pentyloxy, and hexyloxy. One or more hydrogen atoms in the alkoxy group may be substituted with the same substituents as the alkyl group described above.

The term "alkenyl" as used in the Formulae refers to a group derived from a branched or unbranched hydrocarbon group having at least one carbon-carbon double bond. Non-limiting examples of the alkenyl group include vinyl, allyl, butenyl, isopropenyl, and iso-butenyl, wherein one or more hydrogen atoms in the alkenyl may be substituted with the same substituents as the alkyl group described above.

The term "alkynyl" as used in the Formulae refers to a group derived from a branched or unbranched hydrocarbon group having at least one carbon-carbon triple bond. Non-limiting examples of the "alkynyl" include ethynyl, butynyl, isobutynyl, and propynyl.

At least one hydrogen atom of the "alkynyl" may be substituted with the same substituents as the alkyl group described above.

The term "aryl" group as used in the Formulae may be used alone or in combination, and refers to a group derived from an aromatic hydrocarbon group including one or more rings.

The term "aryl" also includes a group in which an aromatic ring is fused to one or more cycloalkyl rings.

Non-limiting examples of the "aryl" include phenyl, naphthyl, and tetrahydronaphthyl.

Also, one or more hydrogen atoms of the "aryl" group may be substituted with the same substituents as the

alkyl group described above.

The term "arylalkyl" refers to an alkyl group substituted with an aryl group. Examples of the arylalkyl include benzyl or phenyl-$CH_2CH_2$-.

The term "aryloxy" as used in the Formulae refers to -O-aryl, and examples of the aryloxy group include phenoxy. One or more hydrogen atoms of the "aryloxy" group may be substituted with the same substituents as the alkyl group described above.

The term "heteroaryl" group as used in the Formulae refers to a monocyclic or bicyclic aromatic organic group including one or more heteroatoms selected from nitrogen (N), oxygen (O), phosphorus (P), and sulfur (S) in a ring, and in which residual ring atoms are carbon atoms. The heteroaryl group may include, for example, one to five heteroatoms and five to ten ring members. The sulfur (S) or nitrogen (N) may be oxidized and have various oxidated states.

One or more hydrogen atoms in the "heteroaryl" may be substituted with the same substituents as the alkyl group described above.

The term "heteroarylalkyl" as used in the Formulae refers to an alkyl group substituted with a heteroaryl group.

The term "heteroaryloxy" as used in the Formulae refers to a -O-heteroaryl moiety. One or more hydrogen atoms of the heteroaryloxy may be substituted with the same substituents as the alkyl group described above.

The term "carbon ring" as used in the Formulae refers a saturated or a partially unsaturated non-aromatic monocyclic, bicyclic, or tricyclic hydrocarbon group.

Examples of the monocyclic hydrocarbon group include cyclopentyl, cyclopentenyl, cyclohexyl, and cyclohexenyl, and examples of the bicyclic hydrocarbon include bornyl, decahydronaphthyl, bicyclo[2.1.1]hexyl, bicyclo[2.2.1]heptyl, bicyclo[2.2.1]heptenyl, and bicyclo[2.2.2]octyl.

Examples of the tricyclic hydrocarbon group include adamantyl.

One or more hydrogen atoms of the "carbon ring" may be substituted with the same substituents as the alkyl group described above.

The term "heterocyclic" group as used in the Formulae refers to a cyclic group formed of five to ten atoms including heteroatoms such as nitrogen atoms, sulfur atoms, phosphorus atoms, and oxygen atoms , and detailed examples thereof include pyridyl, wherein one or more hydrogen atoms of the heterocyclic group may be substituted with the same substituents as the alkyl group described above.

The term "sulfonyl" refers to R"-$SO_2$-, and R" is hydrogen, alkyl, aryl, heteroaryl, aryl-alkyl, heteroaryl-alkyl, alkoxy, aryloxy, a cycloalkyl group, or a heterocyclic group.

The term "sulfamoyl" group includes $H_2NS(O_2)$-, alkyl-$NHS(O_2)$-, $(alkyl)_2NS(O_2)$-, aryl- $NHS(O_2)$-, alkyl-(aryl)-$NS(O_2)$-, $(aryl)_2NS(O)_2$, heteroaryl-$NHS(O_2)$-, (aryl-alkyl)-$NHS(O_2)$-, and (heteroaryl-alkyl)-$NHS(O_2)$-.

One or more hydrogen atoms of the sulfamoyl may be substituted with the same substituents as the alkyl group described above.

The term "amino group" refers to a group in which nitrogen atoms are covalently bonded with at least one carbon or heteroatom. The amino group may include, for example, -$NH_2$ and substituted moieties. Also, it includes "alkylamino" in which nitrogen atoms are coupled with at least one additional alkyl group, an "arylamino" and "diarylamino" in which nitrogen atoms is coupled with one or two aryl groups, respectively.

Hereinafter, one or more embodiments of the present disclosure will be described in detail with reference to the following examples. However, the examples are not intended to limit the scope of the present claims.

Example 1: Preparation of a composite membrane

A lithium-titanium-aluminum-phosphate (LTAP: $Li_{1.4}Ti_{1.6}Al_{0.4}P_3O_{12}$) membrane (Ohara glass) (Ohara corporation) was ground and then sieved by using a sieve having a pore diameter of about 63 micrometers (μm) and about 53 μm to obtain LTAP particles having a size (average diameter) of about 58 μm.

200 milligrams (mg) of LTAP particles, 20 milliliters (ml) of toluene, and 50 mg of iso-butyl(triethoxy)silane (IB) were added to a vial, and then the vial was stirred at a temperature of about 25°C for about 7 hours to obtain a reaction product.

The reaction product was filtered to obtain a filtered product, which was washed with acetone and then vacuum dried at a temperature of about 60°C for about 2 hours to obtain a vacuum dried product. Thereafter, the vacuum dried product was sieved by using a sieve having a pore diameter of about 53 μm and about 63 μm to obtain LTAP (IB-LTAP) particles on which a hydrophobic coating formed of a condensation reaction product of IB is formed. The LTAP (IB-LTAP) particles had a size (average diameter) of about 58 μm.

Separately, 160 mg pentaerythritol tetrakis(3-mercaptopropionate) (4T) and 240 mg of 1,3,5-triallyl-1,3,5-triazine-2,4,6-trione (TTT) were dissolved in 6.6 ml of a mixed solvent of ethanol and chloroform (1:1 mixed volume) to obtain a mixture. 30 mg of Irgacure 369 (BASF) represented by the Formula below, which is a photoinitiator, was added to the mixture, and the mixture was then stirred to obtain a polymer membrane forming composition.

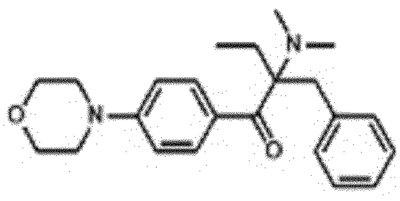

Irgacure 369(BASF)

The polymer membrane forming composition was slowly placed to the water surface in a petri dish (Φ = 3.2 centimeters, cm) filled with water.

Only one tenth of a lid for the petri dish was opened, ethanol and chloroform were slowly evaporated over an hour, and a surface of the residual monomer mixture was flattened.

IB-LTAP particles were dried at a temperature of about 60°C for about 30 minutes and an amount of remaining moisture was controlled to 100 parts per million (ppm) or less. 10 mg of such IB-LTAP particles in which the amount of moisture was controlled was spread on the flattened mixture.

The water surface was irradiated with UV rays for about 15 minutes using a low-pressure mercury lamp (0.08 watts per square centimeter, $W/cm^2$) to initiate a polymerization of TTT and 4T, and to obtain a composite membrane.

The composite membrane was separated from the water surface using a pincette. Here, the composite membrane included a polymer membrane having a plurality of through holes and LTAP particles formed in the through holes, wherein the composite membrane has a structure in which a hydrophobic coating formed of a condensation reaction product of IB is formed on the surface of the LTAP particles. Here, a thickness of the hydrophobic coating was about 10 nanometers (nm) or less, an amount of the condensation reaction product of IB was about 0.01 parts by weight, based on 100 parts by weight of the LTAP particles, and an amount of the LATP particles on which the hydrophobic coating is formed was about 43 parts by weight, based on a total of 100 parts by weight of the composite membrane. An average thickness of the composite membrane was 70 μm.

Example 2: Preparation of a composite membrane

200 mg of IB-LTAP particles obtained from Example 1, 20 mg of toluene, and 50 mg of 3- methacrylpropyl trimethoxysilane (PM) were stirred for about 30 minutes to prepare a reaction mixture. The reaction mixture was filtered and a filtered product obtained therefrom was washed with acetone to obtain a washed product.

The washed product was vacuum dried at a temperature of about 60°C for about 2 hours and a product obtained therefrom was sieved using a sieve having a pore diameter of 53 μm and 63 μm to obtain IB-LTAP particles modified with PM (PM-IB-LTAP particles).

Separately, 160 mg of pentaerythritol tetrakis(3-mercaptopropionate) (4T) and 240 mg of 1,3,5-triallyl-1,3,5-triazine-2,4,6-trione (TTT) were dissolved in 6.6ml of a mixed solvent of ethanol and chloroform (mixed volume of 1:1) to obtain a mixture. 30 mg of Irgacure 369 (BASF), a photoinitiator represented by the Formula below was added to the mixture, and the mixture was then stirred to obtain a polymer membrane forming composition.

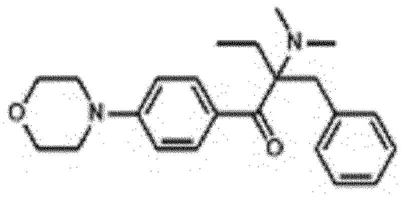

Irgacure 369(BASF)

The polymer membrane forming composition obtained from the processes described above was slowly placed onto a water surface in a petri dish (Φ = 3.2 cm) filled with water.

Only one tenth of a lid for the petri dish was opened, ethanol and chloroform were slowly evaporated over an hour, and a surface of the residual monomer mixture was flattened.

IB-LTAP particles were dried at a temperature of about 60°C for about 30 minutes and an amount of remaining moisture was controlled to 100 ppm or less. 10 mg of such PM-IB-LTAP particles in which the amount of moisture was controlled was spread on the flattened mixture.

The water surface was irradiated with UV rays for about 15 minutes using a low-pressure mercury lamp (0.08 $W/cm^2$) to initiate a polymerization of TTT and 4T, and obtain a composite membrane. The composite membrane was separated from the water surface using a pincette. PM also participated in a photopolymerization reaction during a photopolymerization of TTT and 4T.

Here, the composite membrane prepared according to the processes described above included a polymer membrane having a plurality of through holes and LTAP particles formed in the through holes, wherein the composite membrane has a structure in which a hydrophobic coating formed of a condensation reaction product of IB and PM is formed on the surface of the LTAP particles. Here, a thickness of the hydrophobic coating was about 10 nm or less, an amount of the condensation reaction product of IB and PM was about 0.01 parts by weight, based on 100 parts by weight of the LTAP particles, and an amount of the LATP particles on which the hydrophobic coating is formed was about 43 parts by weight, based on a total of 100 parts by weight of the composite membrane. An average thickness of the composite membrane was 70 μm.

Example 3: Preparation of a composite membrane

A lithium ion conductive ceramic plate phase formed of $Li_2O$, $Al_2O3$, $SiO_2$, $P_2O_5$, $TiO_2$ and $GeO_2$ (Ohara glass) (Ohara corporation) having crystalline lithium-titanium-aluminum-phosphate (LTAP: $Li_{1.4}Ti_{1.6}Al_{0.4}P_3O_{12}$) (thickness: about 260 μm, 3.05 milligrams per cubic centimeter ($mg/cm^3$), and 88 milligrams per square centimeter ($mg/cm^2$)) was ground and then sieved using sieves having pore diameters of 53-63 μm, 75-90 μm, and 100-125 μm to obtain LTAP particles having sizes of 58 μm, 83 μm, and 113 μm (average diameter).

200 mg of the LTAP particles, 20 ml of toluene, and 50 mg of iso-butyl(triethoxy)silane (IB) were added to a vial, and then the vial was stirred at a temperature of about 25°C for about 7 hours to obtain a reaction product.

The reaction product was filtered, a filtered product obtained therefrom was washed with acetone and then vacuum dried at a temperature of about 60°C for about 2 hours. Thereafter, a vacuum dried product obtained therefrom was sieved using sieves having pore diameters of 53-63 μm, 75-90 μm, and 100-125 μm to obtain LTAP(IB-LTAP) particles on which a hydrophobic coating having a condensation reaction product of IB is formed, each having a size (average diameter) of about 58 μm, about 83 μm, and about 113 μm, respectively.

200 mg of the IB-LTAP particles, 20 mg of toluene, and 50 mg of 3-methacryl propyl trimethoxysilane (PM) were stirred for about 30 minutes to prepare a reaction mixture. The reaction mixture was filtered and a filtered product obtained therefrom was washed with acetone to prepare a washed product.

The washed product was vacuum dried at a temperature of about 60°C for about 2 hours, and then a product obtained therefrom was sieved using sieves having pore diameters of 53-63 μm, 75-90 μm, and 100-125 μm to obtain IB-LTAP particles (PM-IB-LTAP particles) modified by PM.

A hydrophobic coating modified by hydrophobic IB and polar PM is formed on a surface of the PM-IB-LTAP particles, and a uniform layer of PM-IB-LTAP particles without any pinhole was formed.

Separately, 500 mg of pentaerythritol tetrakis(3-mercaptopropionate) (4T) and 330 mg of 1,3,5-triallyl-1,3,5-triazine-2,4,6-trione (TTT) were dissolved in 200 μL of a mixed solvent of ethanol and chloroform (mixed volume of 1:1) to obtain a mixture. 30 mg of Irgacure 369 (BASF), a photoinitiator, was added to the mixture, and the mixture was then stirred to obtain a polymer membrane forming composition.

The polymer membrane forming composition was slowly placed onto a water surface in a petri dish (Φ = 3.2 cm) filled with water.

After monomer solution was placed on a water surface, 90% of the monomer solution was covered with a cap, and ethanol and chloroform were slowly evaporated over an hour, and a surface of the residual monomer mixture was flattened. Ion conductive particles PM-IB-LTAP were dried at a temperature of about 60°C for about 30 minutes. An amount of remaining moisture of the Ion conductive particles PM-IB-LTAP was controlled to 100 ppm or less. 10 mg of such PM-IB-LTAP particles in which the amount of moisture was controlled was spread on the flattened mixture.

The water surface was irradiated with UV rays for about 15 minutes using a UV Crosslinker CL-100 (254 nm, 10 $mW/cm^2$) to initiate a polymerization of TTT and 4T, and obtain a composite membrane. A composite membrane was separated from the water surface using a pincette. PM also participated in a photopolymerization reaction during a photopolymerization of TTT and 4T.

Here, the composite membrane included a polymer membrane having a plurality of through holes and LTAP particles formed in the through holes, wherein the composite membrane has a structure in which a hydrophobic coating formed of a condensation reaction product of IB and PM is formed on the surface of the LTAP particles. Here, a thickness of the hydrophobic coating was about 10 nm or less, an amount of the condensation reaction product of IB and PM was about 0.01 parts by weight, based on 100 parts by weight of the LTAP particles, and an amount of the LATP particles on which the hydrophobic coating is formed was about 43 parts by weight, based on a total of 100 parts by weight of the composite membrane. Average thickness values of the composite membranes were each 30 μm, 64 μm, and 69 μm.

Comparative Example 1: Preparation of a LTAP membrane

A LTAP membrane (Ohara glass) having a thickness of about 260 μm was used.

Comparative Example 2: Preparation of a TTT-4T membrane

500 mg of pentaerythritol tetrakis(3-mercaptopropionate) (4T) and 330 mg of 1,3,5-triallyl-1,3,5-triazine-2,4,6-trione (TTT) were dissolved in 6.6 ml of a mixed solvent of ethanol and chloroform (mixed volume of 1:1) to obtain a mixture. 30 mg of Irgacure 369 (BASF), a photoinitiator, was added to the mixture, and the mixture was then stirred to obtain a polymer membrane forming composition.

The polymer membrane forming composition was casted on a petri dish (Φ = 3.2 cm) and then irradiated with UV rays for 15 minutes by using a UV crosslinker CL-100 (254 nm, 10 $mW/cm^2$), to initiate a photopolymerization of TTT and 4T and obtain a TTT-4T membrane.

Example 4: Preparation of a lithium air battery

Multi-walled carbon nanotubes (XinNano corporation), 1M lithium bis(trifluoromethylsulfonylimide) (LiTFSI) in N,N-diethyl-N-methyl-N-(2-methoxyethyl)ammonium bis(trifluoromethylsulfonyl)imide (DEME-TFSI) as an ionic liquid and polyvinylidene fluoride were mixed in a weight ratio of 5:25:1 to prepare a cathode in a sheet form. The cathode in a sheet form was cut into disks having a diameter of 8 millimeters (mm).

Lithium metal disks (thickness of 500 μm) having a diameter of about 15 mm were used as an anode.

2 grams (g) of polyethylene oxide, 0.31 g of silica gel, and 0.26 g of LiTFSI were dissolved in 50 ml of acetonitrile, and the mixture was then stirred for 7 hours to obtain a polymer solution. The polymer solution was casted on a Teflon dish and then dried to obtain a polymer electrolyte film having a thickness of about 190 μm.

The polymer electrolyte film was punched to obtain polymer electrolyte disks having a diameter of about 15 mm. A copper film, lithium metal disks, polymer electrolyte disks, the composite membrane in Example 3, a cathode, and a gas diffusion layer 35BA (SGL group) were assembled to manufacture a lithium air battery.

Examples 5-6: Preparation of a lithium air battery

A lithium air battery was manufactured in the same manner as in Example 4, except for using the composite membranes of Examples 1 and 2 instead of the composite membrane in Example 3.

Example 7: Preparation of a composite membrane

A composite membrane was prepared in the same manner as in Example 3, except for using trimethylolpropane triacrylate instead of TTT when preparing the polymer membrane forming composition.

Example 8: Preparation of a lithium air battery

A lithium air battery was manufactured in the same manner as in Example 4, except for using the composite membrane of Example 7 instead of the composite membrane in Example 3.

Example 9: Preparation of a composite membrane

A lithium ion conductive ceramic plate formed of crystalline lithium-titanium-aluminum-phosphate (LTAP: $Li_{1.4}Ti_{1.6}Al_{0.4}P_3O_{12}$) having $Li_2O$, $Al_2$O3, $SiO_2$, $P_2O_5$, $TiO_2$, and $GeO_2$ (Ohara glass) (Ohara corporation) (thickness of about 260 μm, 3.05 $mg/cm^3$, 88 $mg/cm^2$) was ground and then sieved by using a sieve having a pore diameter of about 53 μm to about 75 μm to about 90 μm to obtain LTAP particles having a size (average diameter) of about 83 μm.

200 mg of LTAP particles, 20 ml of toluene, and 50 mg of (3-mercaptopropyl) trimethoxysilane (SH) were added to a vial, and then the vial was stirred at a temperature of about 25°C for about 7 hours to obtain a reaction product.

The reaction product was filtered to obtain a filtered product, which was washed with acetone and then vacuum dried at a temperature of about 60°C for about 2 hours to obtain a vacuum dried product. Thereafter, the vacuum dried product was sieved by using a sieve having a pore diameter of about 100 μm and about 125 μm to obtain LTAP(SH-LTAP) particles having a size (average diameter) of about 113 μm on which a hydrophobic coating formed of a condensation reaction product of SH.

200 mg of the LTAP particles (SH-LTAP particles), 20 mg of toluene, and 50 mg of 1H, 1H, 2H, 2H-perfluorooctyltriethoxysilane (PFO) were stirred for about 30 minutes to obtain a reaction product. The reaction product was filtered

to obtain a filtered product, which was washed with acetone to obtain a washed product.

The washed product was vacuum dried at a temperature of about 60°C for about 2 hours to obtain a vacuum dried product. Thereafter, the vacuum dried product was sieved by using a sieve having a pore diameter of about 100 μm and about 125 μm to obtain SH-LTAP(PFO-SH-LTAP) particles reformed by PFO.

A hydrophobic coating reformed by PFO and SH is formed on a surface of the PFO-SH-LTAP particles and a uniform layer of PFO-SH-LTAP particles is formed without any pinhole.

Separately, 500 mg pentaerythritol tetrakis(3-mercaptopropionate) (4T) and 330 mg of 1,3,5-triallyl-1,3,5-triazine-2,4,6-trione (TTT) were dissolved in 200 μL of a mixed solvent of ethanol and chloroform (1:1 mixed volume) to obtain a mixture. 30 mg of Irgacure 369 (BASF), which is a photoinitiator, was added to the mixture, and the mixture was then stirred to obtain a polymer membrane forming composition.

The polymer membrane forming composition was added slowly in a drop-wise manner to the water surface in a petri dish ($\Phi$ = 3.2 cm) filled with water. Monomer solution was placed on a water surface; 90% of the solution was covered with a lid; ethanol and chloroform were slowly evaporated therefrom over an hour; and then a surface of the residual monomer mixture was flattened to create a flattened product.

Ion conductive particles (PM-IB-LTAP) were dried for 30 minutes at a temperature of about 60°C. At this point, an amount of moisture included in the particles was controlled at 100 ppm or less. 10 mg of such PM-IB-LTAP particles having a controlled amount of moisture were spread over the flattened product.

The water surface was irradiated with UV rays using UV Crosslinker CL-100 (254 nm, 10 mW/cm$^2$) for about 15 minutes to initiate a polymerization of TTT and 4T, and to obtain a composite membrane. The composite membrane was separated from the water surface using a pincette. PM also participated in the photopolymerization of the TTT and 4T.

The composite membrane obtained from the processes above includes a polymer membrane having a plurality of through holes and LTAP particles formed in the through holes, wherein the composite membrane has a structure in which a hydrophobic coating formed of a condensation reaction product of PFO and SH is formed on the surface of the LTAP particles. Here, a thickness of the hydrophobic coating was about 10 nm or less, an amount of the condensation reaction product of PFO and SH was about 0.01 parts by weight, based on 100 parts by weight of the LTAP particles, and an amount of the LATP particles on which the hydrophobic coating is formed was about 43 parts by weight, based on a total of 100 parts by weight of the composite membrane. An average thickness of the composite membrane was about 70 μm.

Example 10: Preparation of composite membrane

A composite membrane was obtained in the same manner as in Example 9, except for using trimethoxy(3,3,3-trifluoropropyl)silane (TF) instead of PFO.

Example 11: Preparation of composite membrane

A composite membrane was obtained in the same manner as in Example 9, except for using PM instead of 3-mercaptopropyl trimethoxysilane (SH).

Example 12: Preparation of composite membrane

A composite membrane was obtained in the same manner as in Example 11, except for using trimethoxy(3,3,3-trifluoropropyl)silane (TF) instead of PFO.

Comparative Example 3: Preparation of a lithium air battery

A lithium air battery was manufactured in the same manner as in Example 4, except for using the LTAP membrane of Comparative Example 1 instead of the composite membrane in Example 3.

Comparative Example 4

200 mg of LTAP particles, 20 mg of toluene, and 50 mg of (3-methacrylpropane trimethoxysilane) (PM) were stirred for about 15 minutes to obtain a reaction product. The reaction product was filtered to obtain a filtered product, which was washed with acetone to obtain a washed product.

The washed product was vacuum dried at a temperature of about 60°C for about 2 hours to obtain a vacuum dried product. Thereafter, the vacuum dried product was sieved by using a sieve having a pore diameter of about 63 μm to obtain PM-LTAP particles having a PM hydrophobic coating reformed by PM.

Separately, 160 mg pentaerythritol tetrakis(3-mercaptopropionate) (4T) and 240 mg of 1,3,5-triallyl-1,3,5-triazine-2,4,6-trione (TTT) were dissolved in 200 μL of a mixed solvent of ethanol and chloroform (1:1 mixed volume) to obtain a mixture. 30 mg of Irgacure 369 (BASF), which is a photoinitiator, was added to the mixture, and the mixture was then stirred to obtain a polymer membrane forming composition.

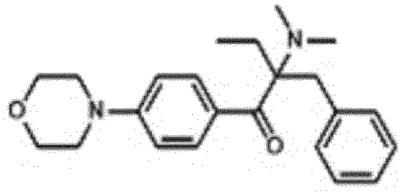

Irgacure 369(BASF)

The polymer membrane forming composition was added slowly in a drop-wise manner to the water surface in a petri dish (Φ = 3.2 cm) filled with water.

A petri dish lid was opened by $1/10^{th}$; ethanol and chloroform were slowly evaporated therefrom over an hour; and then a surface of the residual monomer mixture was flattened to create a flattened product.

PM-LTAP particles were dried for 30 minutes at a temperature of about 60°C. At this point, an amount of moisture included in the particles was controlled at 100 ppm or less. 10 mg of such PM-IB-LTAP particles having controlled amount of moisture were spread over the flattened product.

The water surface was irradiated with UV rays for about 15 minutes using a low-pressure mercury lamp (0.08 $W/cm^2$) to initiate a polymerization of TTT and 4T, and obtain a composite membrane. The composite membrane was separated from the water surface using a pincette. PM also participated in a photopolymerization reaction during a photopolymerization of TTT and 4T.

The composite membrane obtained from the processes above includes a polymer membrane having a plurality of through holes and LTAP particles formed in the through holes, wherein the composite membrane has a structure in which a hydrophobic coating formed of a condensation reaction product of PM is formed on the surface of the LTAP particles. Here, a thickness of the hydrophobic coating was about 10 nm or less, an amount of the condensation reaction product of PM was about 0.01 parts by weight, based on 100 parts by weight of the LTAP particles, and an amount of the LATP particles on which the hydrophobic coating is formed was about 43 parts by weight, based on a total of 100 parts by weight of the composite membrane. An average thickness of the composite membrane was 70 μm.

Comparative Example 5-7

Composite membranes were prepared in the same manner as in Comparative Example 4, except for using 1H, 1H, 2H, 2H-perfluorooctyltriethoxysilane (PFO), n-decyltriethoxysilane (D), and 3-mercaptopropyl) trimethoxysilane (SH) instead of PM, respectively.

Comparative Example 8: Preparation of LTAP membrane

An LTAP membrane (Ohara glass) having a thickness of 70 μm was used instead of one having a thickness of 260 μm.

Evaluation Example 1: Measuring contact angles

Contact angles of the composite membranes prepared according to Examples 1 through 3 and 9 through 12 and the LTAP membrane prepared according to Comparative Example 1 were measured. The contact angles were measured by using a contact angle measuring device, a drop shape analyzer DSA100S (Kruss corporation), and a measuring method of the contact angles was as follows.

First, a contact angle of the LTAP membrane in Comparative Example 1 was measured by dropping small droplets of water onto a surface of the membrane and then analyzing an angle formed between the droplet and the LTAP membrane.

A contact angle of the composite membrane prepared according to Example 3 was measured according to the method described below.

The PM-IB-LTAP particles obtained in Example 3 were slowly added to a water surface in a petri dish (Φ = 3.2 cm) filled with water to measure contact angles of the PM-IB-LTAP particles, a/w/p (θawp). Here, each of a, w, and p represent air, water, and the particles, respectively.

Separately, 500 mg of 4T and 330 mg of TTT, which are monomers, were dissolved in 6.6 ml of a mixed solvent of ethanol and chloroform (mixed volume of 1:1) to obtain a mixture. 30 mg of Irgacure 369 (BASF), a photoinitiator, was added to the mixture, and the mixture was then stirred to obtain a polymer membrane forming composition.

0.46 ml of the polymer membrane forming composition obtained from the processes described above were slowly added to a water surface in a petri dish (Φ = 3.2 cm) filled with water.

After 30 minutes of the slow addition, contact angle a/m/p (θamp) and contact angle w/m/p (θwmp) of the PM-IB-LTAP particles were measured. Each of a, m, p, and w is an abbreviation for air, monomers, particles, water, respectively.

The contact angle a/w/p (θawp), the contact angle a/m/p (θamp), and the contact angle w/m/p (θwmp) of the composite membranes in Examples 1 and 2 were measured in the same manner as in Example 3, except for using the IB-LTAP particles obtained according to Example 1 and the PM-IB-LTAP particles obtained according to Example 2, instead of using the LTAP particles (PM-IB-LTAP particles) obtained according to Example 3.

The measurement results of the contact angle a/w/p (θawp), the contact angle a/m/p (θamp), and the contact angle w/m/p (θwmp) are as shown in Table 1 below.

Table 1

| Classification | Composition of the composite membrane | Θawp(°) | Θamp(°) | Θwmp(°) |
|---|---|---|---|---|
| Example 1 (Thickness of about 70 μm) | IB-LTAP/TTT+4T | - | 58.2(62.1*) | 75.4(81.2*) |
| Example 2 (Thickness of about 70 μm) | PM-IB-LTAP/TTT+4T | - | 43.6 | 80.3 |
| Example 3 (Thickness of about 30 μm) | PM-IB-LTAP/TTT+4T | 66.2 | 43.6 | 80.3 |
| Example 9 (Thickness of about 70 μm) | PFO-SH-LTAP/ TTT+4T | - | 32.7(36.9*) | 64.0(65.1*) |
| Example 10 (Thickness of about 70 μm) | TF-SH-LTAP/TTT+4T | - | 33.1(40.5*) | 82.9(87.9*) |
| Example 11 (Thickness of about 70 μm) | PFO-PM-LTAP/ TTT+4T | - | 34.4 | 72.5 |
| Example 12 (Thickness of about 70 μm) | TF-PM-LTAP/ TTT+4T | - | 31.8 | 72.6 |
| Comparative Example 1 (Thickness of about 260 μm) | LTAP | 42.8 | 41.3 | 110.0 |
| Comparative Example 4 (Thickness of about 70 μm) | PM-LTAP/TTT+4T | - | 28.7 | 92.3 |
| Comparative Example 5 (Thickness of about 70 μm) | PFO-LTAP/TTT+4T | - | 65.3 | 95.6 |
| Comparative Example 6 (Thickness of about 70 μm) | D-LTAP/TTT+4T | - | 24.8 | 62.1 |
| Comparative Example 7 (Thickness of about 70 μm) | SH-LTAP/TTT+4T | - | 29.7 | 112.6 |
| Comparative Example 8 (Thickness of about 70 μm) | LTAP | 42.8 | 41.3 | 110.0 |
| *: Contact angle of the composite membrane was measured. | | | | |

As shown in Table 1 above, the composite membranes prepared according to Examples 1 through 3, and 9 through 12 have all of contact angle a/w/p (θawp), contact angle a/m/p (θamp), and contact angle w/m/p (θwmp) in a range of about 30° to about 90°. The composite membrane showed a structure in which particles are uniformly dispersed without any formation of pinholes in the organic membrane.

In comparison, the composite membrane prepared according to Comparative Example 1 had θwmp greater than 90 °. Also, the composite membranes prepared according to Comparative Examples 3 through 8 showed one or more of θamp and θwmp exceeding the range of about 30° to about 90°.

Evaluation Example 2: Optical microscopy analysis

The composite membrane prepared according to Example 3 (a thickness of about 69 μm) was analyzed through

optical microscopy. The optical microscope used was Eclipse LV100D manufactured by Nikon corporation.

The composite membranes prepared according to Example 3 are shown in FIGS. 7A through 7C. Each of FIGS. 7A, 7B, and 7C shows a cross-sectional view, a top view, and a bottom view of the composite membranes, respectively.

Referring to FIGS. 7A through 7C, the composite membranes prepared according to Example 3 have polymers and LTAP particles uniformly dispersed therein. Also, the composite membrane has a structure in which the LTAP particles embedded in the polymer membrane are disposed in a monolayer.

Evaluation Example 3: Measurement of resistance and impedance

The composite membranes prepared according to Example 3 were prepared to be within $t_p$ and $X_p$ ranges shown in Table 2 below and platinum was sputtered on the composite membranes to manufacture structures. Then, impedance of the structures was measured.

Table 2

| | $t_p$ (μm) | $X_p$ |
|---|---|---|
| Composite membrane A | 260 | 1.0 |
| Composite membrane B | 69 | 0.3 |
| Composite membrane C | 64 | 0.32 |
| Composite membrane D | 45 | 0.36 |

In Table 2 above, $t_p$ represents a thickness of the LTAP particles and $X_p$ represents an area fraction of the LTAP particles in the composite membrane.

FIG. 8D is a schematic view showing a definition of an area fraction ($X_p$) of ion conductive inorganic material particles and a thickness of ion conductive inorganic material particles of the composite membrane in FIG. 8B. Here, crystalline lithium-titanium-aluminum-phosphate (LTAP) particles is used as the ion conductive inorganic material particles.

As shown in FIG 8D and Equation 11 below, $X_p$ represents a ratio of a total area of exposed LTAP particles, $A_p$, to a total area of the composite membrane, $A_{tolal}$ ($X_p = A_p/A_{total}$).

Equation 11

$$X_p = A_p/A_{total}$$

In Equation 11 above, $A_p$ is a total area of the exposed particles and $A_{total}$ is a total area of the composite membrane.

An impedance measuring device used was an impedance analyzer VMP3 of Bio Logic corporation. The impedance of the structures was measured at about 20, 40, 60, 80, and 100°C, respectively, and impedance analysis results according to temperatureis shown in FIG. 8A.

The impedance was evaluated under the condition of applying an alternating current of about 5 millivolts (mV) in a frequency range from 1 hertz (Hz) to 100 megahertz (MHz), and then shown as a profile function of impedance of a real part and an imaginary part. Referring to FIG. 8A, it may be concluded that the structure including the composite membrane in Example 3 shows an excellent impedance of $3.9\times10^{-4}$ siemens per centimeter ($Scm^{-1}$) at a temperature of about 60°C, and more particularly, an excellent ion conductivity at a temperature of 60°C or less.

Also, area specific resistance properties were evaluated at different temperatures while changing the total area of the exposed PM-IB-LTAP particles on the composite membranes A through D prepared according to Example 3. The area specific resistance was calculated from the impedance properties.

In FIG. 8B, $X_p$ shows changes in conductivity according to occupied areas of the LTAP particles in the composite membranes A through D, and FIG. 8C shows changes in area specific resistance according to changes in temperature.

The conductivity of the LTAP particles is as shown in Equation 12.

Equation 12

$$\sigma_p = t_p/A_pR$$

In Equation 12, R represents an area specific resistance. Also, $t_p$ and $A_p$ each represent a thickness and a sectional area of the exposed PM-IB-LTAP particles, and $t_p/A_p$ represents a shape parameter.

Evaluation results of the area specific resistance are shown in FIG. 8C.

Referring to FIG. 8B, a relationship between the thickness, occupied area, and conductivity of the ion conductive inorganic particles may be known.

Referring to FIG. 8C, the composite membrane D, has the thinnest LTAP particles compared to the composite membranes A through C. The area specific resistance of the composite membrane D is about 29 ohm square centimeters ($\Omega cm^2$), which is smaller than the area specific resistance 66 $\Omega cm^2$ of the LTAP polar plate ($X_p$ = 1, $t_p$ = 200 $\mu$m). As a result, it may be concluded that a channel structure of the composite membrane according to an embodiment substantially reduces area specific resistance and area weight.

Evaluation Example 4: Analysis of an oxygen permeability 1) Examples 1 and 2, and Comparative Examples 1, 2, 4 through 7

Permeability of the composite membranes prepared in Examples 1 and 2 and the LTAP membranes prepared in Comparative Examples 1, 2, 4 through 7 were evaluated according to the method described below.

An oxygen transmission experiment was performed by using an oxygen permeability tester, OX-TRAN 2/21 ML, from MOCON corporation, and using tester disks having an area of about 1 square centimeters ($cm^2$) or less.

The evaluation results of the oxygen permeability are as shown in Table 3 below.

Table 3

| | Oxygen permeability ($cm^3 cm/m^2$ day atm) |
|---|---|
| Example 1 | 0.52 |
| Example 2 | 0.31 |
| Comparative Example 1 | 0.21 |
| Comparative Example 2 | 0.7 |
| Comparative Example 4 | Measurement unavailable (>100000) |
| Comparative Example 5 | Measurement unavailable (>100000) |
| Comparative Example 6 | Measurement unavailable (>100000) |
| Comparative Example 7 | Measurement unavailable (>100000) |

As shown in Table 3 above, the composite membrane prepared according to Examples 1 and 2 have excellent oxygen barrier properties.

In comparison, the composite membranes prepared in Comparative Examples 1 and 2 showed decreased oxygen barrier properties than Examples 1 and 2, and the oxygen permeability of the composite membranes in Comparative Examples 4 through 7 were difficult to measure as they exceeded the measurement limits.

2) Examples 2 and 3, Comparative Example 1, and Comparative Example 2

Oxygen permeability and moisture permeability of the composite membranes prepared according to Examples 2 and 3, the LTAP membrane prepared according to Comparative Example 1, and the TTT-4T membrane prepared according to Comparative Example 2 were evaluated according to the method described below.

The oxygen and moisture transmission rates were measured by a continuous flow testing method by ASTM (D3985) using MOCON Aquatran model 1 and MOCON Oxytran 2/21 instrument, respectively (MOCON Corporation).

An oxygen and moisture transmission experiment was performed by using tester disks having an area of about

1 $cm^2$ and nitrogen gas was flushed to purge an excessive amount of gas and evaluation results thereof are as shown in FIG. 9 and Table 4 below.

Table 4

| | moisture permeability ($cm^3 cm/m^2$ day atm) | oxygen permeability ($cm^3 cm/m^2$ day atm) |
|---|---|---|
| Example 2 | 237 | 0.31 |
| Example 3 | 623 | 0.41 |
| Comparative Example 1 | 0.03 | 0.21 |
| Comparative Example 2 | 810 | 0.70 |

Referring to FIG. 9 and Table 4 above, it may be concluded that the composite membranes prepared according to Examples 2 and 3 have improved oxygen and moisture transmission rates compared to the TTT-4T membrane prepared according to Comparative Example 2. Accordingly, the composite membrane prepared according to Example 3 has excellent oxygen and moisture barrier properties. Improvements in the oxygen and moisture transmission rates of the composite membrane prepared according to Example 3 are due to the absence of leaks between a TTT-4T polymer matrix and the PM-IB-LTAP particles, and excellent blocking effects of both materials.

Evaluation Example 5: Charge and discharge characteristics and cycle characteristics of a lithium air battery

The lithium air battery prepared according to Example 4 was disposed in a chamber maintained at a temperature of about 60°C and under an oxygen atmosphere. A cell was discharged at 1 atmosphere (atm) of oxygen in a constant current (CC) mode of 0.24 milliamperes per square centimeter ($mA/cm^2$), and it was charged in a CC mode at 0.24 milliampere hours per square centimeter ($mAh/cm^2$) and then in a constant voltage (CV) mode at 4.3 volts (V).
A charge-discharge capacity of the lithium air battery was fixed at about 200 milliampere hours per gram of carbon ($mAh/g_{carbon}$).
Charge-discharge characteristics of the lithium air battery are shown in FIG. 10 and cycle characteristics are shown in FIG. 11.
Referring to FIG. 10, the charge and discharge characteristics of the lithium air battery showed a discharge plateau at about 2.6 V.
Referring to FIG. 11, the lithium air battery showed a reduced discharge capacity after about 93 cycles. Such reduction in discharge capacity is due to the cathode deterioration in the lithium air battery.

Evaluation Example 6: XPS analysis

The PM-IB-LTAP particles prepared according to Example 3 were analyzed by using XPS. Analytical results of XPS with respect to Si 2p and C 1s are shown in FIGS. 12A and 12B.
Referring to FIGS. 12A and 12B, C1S peak appeared at 284.7 electron volts (eV) and 288.6 eV and the peak was caused by C-H and C=O, corresponding to IB and PM. From these results, it may be concluded that the LTAP particles obtained in Example 3 have a hydrophobic coating modified by IB-PM.
According to an embodiment, provided is a composite membrane having excellent gas and moisture barrier properties, improved ion conductivity, and capable of being transformed into a film. When the composite membrane is used, a lithium secondary battery having improved specific capacity and life span may be manufactured.
It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.
While one or more exemplary embodiments have been described with reference to the figures, it will be understood by those of ordinary skill in the art that various changes in form and details may be made therein without departing from the scope of the present claims.

## Claims

**1.** A composite membrane comprising:

an organic membrane comprising a plurality of through holes and a plurality of ion conductive inorganic material

particles in the through holes,
wherein a hydrophobic coating is on at least a portion of the plurality of ion conductive inorganic material particles;
wherein a contact angle of the ion conductive inorganic material particles in the composite membrane towards water is 30° to 90°, preferably wherein the contact angle is 40° to 85°;
the organic membrane comprises:

i) a polymerization product of one or more multi-functional monomers selected from a multi-functional acryl-based monomer and a polyfunctional vinyl-based monomer, or
ii) a polymerization product comprising one or more multi-functional monomers selected from a multi-functional acryl monomer and a multi-functional vinyl monomer, and a polythiol comprising three or four thiol groups; and

the plurality of ion conductive inorganic material particles are glassy active material ion conductors, amorphous active material ion conductors, ceramic active material ion conductors, glass-ceramic active material ion conductors, or a combination thereof.

**2.** The composite membrane of claim 1, wherein the hydrophobic coating is disposed on a surface of the plurality of ion conductive inorganic material particles that is not exposed through a surface of the composite membrane.

**3.** The composite membrane of claim 1 or 2, wherein
the hydrophobic coating comprises a condensation reaction product of at least one selected from compounds represented by Formula 1:

Formula 1

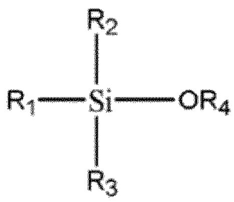

wherein in Formula 1,

$R_1$ to $R_3$ are each independently selected from a substituted or unsubstituted C1-C20 alkyl group, a substituted or unsubstituted C1-C20 alkoxy group, a substituted or unsubstituted C2-C20 alkenyl group, a substituted or unsubstituted C2-C20 alkynyl group, a substituted or unsubstituted C6-C20 aryl group, a substituted or unsubstituted C7-C20 arylalkyl group, a substituted or unsubstituted C6-C20 aryloxy group, a substituted or unsubstituted C2-C20 heteroaryl group, a substituted or unsubstituted C2-C20 heteroaryloxy group, a substituted or unsubstituted C3-C20 heteroarylalkyl group, and a substituted or unsubstituted C2-C20 heterocyclic group, or a halogen atom, and
$R_4$ is hydrogen, a substituted or unsubstituted C1-C20 alkyl group, or a substituted or unsubstituted C6-C20 aryl group, preferably wherein:

the compound represented by Formula 1 is one or more selected from iso-butyl trimethoxysilane, octyl trimethoxysilane, propyl trimethoxysilane, decyl trimethoxysilane, dodecyl trimethoxysilane, octadecyl trimethoxysilane, 3-methacryloxypropyl trimethoxysilane, n-octadecyl triethoxysilane, 1H, 1H, 2H, 2H-perfluorooctyl triethoxysilane, and 3-mercaptopropyl trimethoxysilane; and/or
an amount of the condensation reaction product of at least one selected from the compounds represented by Formula 1 is 0.1 parts by weight to 30 parts by weight, based on 100 parts by weight of the plurality of ion conductive inorganic material particles.

**4.** The composite membrane of any of claims 1-3, wherein a surface of the composite membrane comprises:

a sea-island structure, in which the conductive inorganic material particles are discontinuously arranged in a continuous organic membrane, or

an alternately aligned structure, in which a cross-section of the composite membrane comprises the organic membrane that alternates with the ion conductive inorganic material particles.

**5.** The composite membrane of any of claims 1-4, wherein the organic membrane comprises one or more selected from a homopolymer, a block copolymer, and a random copolymer.

**6.** The composite membrane of any of claims 1-5, wherein the plurality of ion conductive inorganic material particles embedded in the organic membrane are arranged as a monolayer or wherein the plurality of ion conductive inorganic material particles are in a form of a single particle without a grain boundary between the ion conductive inorganic material particles.

**7.** The composite membrane of any of claims 1-6, wherein the plurality of ion conductive inorganic material particles are one or more selected from $Li_{1+x+y}Al_xTi_{2-x}Si_yP_{3-y}O_{12}$ (wherein $0<x<2$ and $0\leq y<3$), $BaTiO_3$, $Pb(Zr,Ti)O_3$, $Pb_{1-x}La_xZr_{1-y}Ti_yO_3$ (wherein $0\leq x<1$ and $0\leq y<1$), $Pb(Mg_3Nb_{2/3})O_3$-$PbTiO_3$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, SiC, $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al, Ga)_x(Ti, Ge)_{2-x}Si_yP_{3-y}O_{12}$ (wherein $0\leq x\leq 1$ and $0\leq y\leq 1$), $Li_xLa_yTiO_3$ (wherein $0<x<2$ and $0<y<3$), $Li_xGe_yP_zS_w$ (wherein $0<x<4$, $0<y<1$, $0<z<1$, and $0<w<5$), $Li_xN_y$ (wherein $0<x<4$ and $0<y<2$), $Li_xSi_yS_z$ (wherein $0<x<3$, $0<y<2$, and $0<z<4$), $Li_xP_yS_z$ (wherein $0<x<3$, $0<y<3$, and $0<z<7$), $Li_2O$, LiF, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (wherein $0<x<10$ and M = Te, Nb, or Zr), and a combination thereof.

**8.** The composite membrane of any of claims 1-7, wherein the organic membrane comprises a polymer, which is a moisture barrier and a gas barrier.

**9.** The composite membrane of any of claims 1-8,
wherein the multi-functional monomer preferably is one or more selected from diurethane dimethacrylate, trimethylolpropane triacrylate, diurethane diacrylate, trimethylolpropane trimethacrylate, neopentyl glycol diacrylate, 3'-acryloxy-2',2'-dimethylpropyl 3-acryloxy-2,2-dimethylpropionate, bisphenol A diacrylate, and 1,3,5-triallyl-1,3,5-triazine-2,4,6-trione, and
the polythiol is one or more selected from pentaerythritol tetrakis(3-mercaptopropionate), trimethylolpropane tris(3-mercaptopropionate), 4-mercaptomethyl-3,6-dithia-1,8-octanedithiol, pentaerythritol tetrakis(2-mercaptoacetate), and trimethylolpropane tris(2-mercaptoacetate).

**10.** The composite membrane of any of claims 1-9, wherein the organic membrane comprises a polymerization product of pentaerythritol tetrakis(3-mercaptopropionate) and 1,3,5-triallyl-1,3,5-triazine-2,4,6-trione.

**11.** A method of preparing a composite membrane, the method comprising:

drying ion conductive inorganic material particles comprising a hydrophobic coating disposed on at least a portion thereof such that an amount of moisture in the particles is 100 ppm or less;
floating a combination of a polymerizable non-aqueous compound capable of floating on a water surface, a solvent, and a plurality of the ion conductive inorganic material particles on a water surface to form a resultant;
blowing on the resultant by supplying a gas to the resultant;
removing the solvent from the resultant to form a residue; and
polymerizing the residue to prepare the composite membrane of any of claims 1-10; wherein the polymerizable non-aqueous compound capable of floating on a water surface comprises: one or more of multi-functional monomers selected from a multi-functional acryl monomer and a polyfunctional vinyl monomer, or ii) a mixture of one or more of multi-functional monomers selected from a multi-functional acryl monomer, a polyfunctional vinyl monomer, and a polythiol having three or four thiol groups; and
the plurality of ion conductive inorganic material particles are glassy active material ion conductors, amorphous active material ion conductors, ceramic active material ion conductors, glass-ceramic active material ion conductors, or a combination thereof.

**12.** The method of claim 11, wherein:

the floating comprises:

a first floating comprising placing a portion of a further combination comprising a polymerizable non-aqueous

compound capable of floating on a water surface and a solvent in water to form a further resultant;
a second floating comprising providing a plurality of ion conductive inorganic material particles having a hydrophobic coating formed on at least a portion thereof to the further resultant to place the ion conductive inorganic material particles on a water surface; and
a third floating comprising placing a residual of the further combination of the polymerizable non-aqueous compound and the solvent in the water.

**13.** A negative electrode structure comprising:

a negative electrode and
the composite membrane of any of claims 1-10.

**14.** A method of preparing a negative electrode structure comprising:

- preparing a composite membrane in accordance with the method of claim 11 or 12, and
- assembling the composite membrane onto a negative electrode, optionally with an electrolyte disposed between the composite membrane and the negative electrode.

**15.** A lithium secondary battery comprising the negative electrode structure of claim 13, optionally wherein the lithium secondary battery is a lithium air battery.

**16.** A method of preparing a lithium secondary battery comprising:

- preparing a composite membrane in accordance with the method of claim 11 or 12, and
- assembling a lithium air battery such that the composite membrane is disposed between a positive electrode and a negative electrode formed on a substrate, optionally with an electrolyte disposed between the composite membrane and the negative electrode.

## Patentansprüche

**1.** Verbundmembran, umfassend:

eine organische Membran, die eine Vielzahl von Durchgangslöchern und eine Vielzahl von ionenleitenden anorganischen Materialpartikel in den Durchgangslöchern umfasst,
wobei eine hydrophobe Beschichtung auf mindestens einem Teil der Vielzahl von ionenleitenden anorganischen Materialpartikel ist;
wobei ein Kontaktwinkel der ionenleitenden anorganischen Materialpartikel in der Verbundmembran gegenüber Wasser 30° bis 90° ist, vorzugsweise wobei der Kontaktwinkel 40° bis 85° ist;
wobei die organische Membran Folgendes umfasst:

i) ein Polymerisationsprodukt aus einem oder mehreren multifunktionellen Monomeren, ausgewählt aus einem multifunktionellen acrylbasierten Monomer und einem polyfunktionellen vinylbasierten Monomer, oder
ii) ein Polymerisationsprodukt, umfassend ein oder mehrere multifunktionelle Monomere, ausgewählt aus einem multifunktionellen Acrylmonomer und einem multifunktionellen Vinylmonomer, und ein Polythiol, umfassend drei oder vier Thiolgruppen; und

wobei die Vielzahl der ionenleitenden anorganischen Materialpartikel glasartige Aktivmaterial-Ionenleiter, amorphe Aktivmaterial-Ionenleiter, keramische Aktivmaterial-Ionenleiter, glaskeramische Aktivmaterial-Ionenleiter oder eine Kombination davon sind.

**2.** Verbundmembran nach Anspruch 1, wobei die hydrophobe Beschichtung auf einer Oberfläche der Vielzahl von ionenleitenden anorganischen Materialpartikeln angeordnet ist, die nicht durch eine Oberfläche der Verbundmembran freigelegt ist.

**3.** Verbundmembran nach Anspruch 1 oder 2, wobei die hydrophobe Beschichtung ein Kondensationsreaktionsprodukt von mindestens einem umfasst, das ausgewählt ist aus Verbindungen, die durch Formel 1 dargestellt sind:

Formel 1

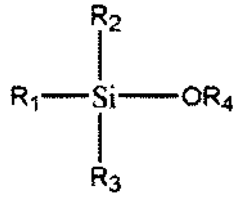

wobei in Formel 1

$R_1$ bis $R_3$ jeweils unabhängig ausgewählt sind aus einer substituierten oder unsubstituierten C1-C20-Alkyl-Gruppe, einer substituierten oder unsubstituierten C1-C20-Alkoxy-Gruppe, einer substituierten oder unsubstituierten C2-C20-Alkenyl-Gruppe, einer substituierten oder unsubstituierten C2-C20-Alkinyl-Gruppe, einer substituierten oder unsubstituierten C6-C20-Aryl-Gruppe, einer substituierten oder unsubstituierten C7-C20-Arylalkyl-Gruppe, einer substituierten oder unsubstituierten C6-C20-Aryloxy-Gruppe, einer substituierten oder unsubstituierten C2-C20-Heteroaryl-Gruppe, einer substituierten oder unsubstituierten C2-C20-Heteroaryloxy-Gruppe, einer substituierten oder unsubstituierten C3-C20-Heteroarylalkyl-Gruppe und einer substituierten oder unsubstituierten C2-C20-Heterozyklen-Gruppe oder einem Halogenatom, und
$R_4$ Wasserstoff, eine substituierten oder unsubstituierten C1-C20-Alkyl-Gruppe oder eine substituierte oder unsubstituierte C6-C20-Aryl-Gruppe ist, vorzugsweise wobei:

die Verbindung, die durch die Formel 1 dargestellt ist, ein oder mehrere ist, ausgewählt aus Isobutyltrimethoxysilan, Octyltrimethoxysilan, Propyltrimethoxysilan, Decyltrimethoxysilan, Dodecyltrimethoxysilan, Octadecyltrimethoxysilan, 3-Methacryloxypropyltrimethoxysilan, n-Octadecyltriethoxysilan, 1H, 1H, 2H, 2H-Perfluorooctyltriethoxysilan und 3-Mercaptopropyltrimethoxysilan; und/oder
eine Menge des Kondensationsreaktionsprodukts von mindestens einem, ausgewählt aus den Verbindungen der Formel 1, 0,1 Gewichtsteile bis 30 Gewichtsteile bezogen auf 100 Gewichtsteile der Vielzahl von ionenleitenden anorganischen Materialpartikeln ist.

**4.** Verbundmembran nach einem der Ansprüche 1-3, wobei eine Oberfläche der Verbundmembran Folgendes umfasst:

eine Meeresinselstruktur, in der die leitfähigen anorganischen Materialpartikel diskontinuierlich in einer kontinuierlichen organischen Membran angeordnet sind, oder
eine abwechselnd ausgerichtete Struktur, in der ein Querschnitt der Verbundmembran die organische Membran umfasst, die sich mit den ionenleitenden anorganischen Materialpartikeln abwechselt.

**5.** Verbundmembran nach einem der Ansprüche 1-4, wobei die organische Membran eines oder mehrere umfasst, ausgewählt aus einem Homopolymer, einem Block-Copolymer und einem zufälligen Copolymer.

**6.** Verbundmembran nach einem der Ansprüche 1-5, wobei die Vielzahl der in die organische Membran eingebetteten ionenleitenden anorganischen Materialpartikel als Monoschicht angeordnet ist, oder wobei die Vielzahl von ionenleitenden anorganischen Materialpartikeln in Form eines einzelnen Partikels ohne eine Korngrenze zwischen den ionenleitenden anorganischen Materialpartikeln ist.

**7.** Verbundmembran nach einem der Ansprüche 1-6, wobei die Vielzahl der ionenleitenden anorganischen Materialpartikel eines oder mehrere sind, ausgewählt aus $Li_{1+x+y}Al_xTi_{2-x}Si_yP_{3-y}O_{12}$ (wobei $0<x<2$ und $0\leq y<3$), $BaTiO_3$, $Pb(Zr,Ti)O_3$, $Pb_{1-x}La_xZr_{1-y}Ti_yO_3$ (wobei $0\leq x<1$ und $0\leq y<1$), $Pb(Mg_3Nb_{2/3})O_3-PbTiO_3$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, SiC, $Li_3PO_4$, $Li_xTi_y(PO_4)_3$ (wobei $0<x<2$ und $0<y<3$), $Li_xAl_yTi_z(PO_4)_3$ (wobei $0<x<2$, $0<y<1$ und $0<z<3$), $Li_{1+x+y}(Al, Ga)_x(Ti, Ge)_{2-x}Si_yP_{3-y}O_{12}$ (wobei $0\leq x\leq 1$ und $0\leq y\leq 1$), $Li_xLa_yTiO_3$ (wobei $0<x<2$ und $0<y<3$), $Li_xGe_yP_zS_w$ (wobei $0<x<4$, $0<y<1$, $0<z<1$ und $0<w<5$), $Li_xN_y$ (wobei $0<x<4$ und $0<y<2$), $Li_xSi_yS_z$ (wobei $0<x<3$, $0<y<2$ und $0<z<4$), $Li_xP_yS_z$ (wobei $0<x<3$, $0<y<3$, und $0<z<7$), $Li_2O$, LiF, LiOH, $Li_2CO_3$, $LiAlO_2$, $Li_2O-Al_2O_3-SiO_2-P_2O_5-TiO_2-GeO_2$, $Li_{3+x}La_3M_2O_{12}$ (wobei $0<x<10$ und M = Te, Nb, oder Zr) und einer Kombination davon.

**8.** Verbundmembran nach einem der Ansprüche 1-7, wobei die organische Membran ein Polymer umfasst, das eine Feuchtigkeitsbarriere und eine Gasbarriere ist.

**9.** Verbundmembran nach einem der Ansprüche 1-8, wobei das multifunktionelle Monomer vorzugsweise eines oder mehrere ist, ausgewählt aus Diurethandimethacrylat, Trimethylolpropantriacrylat, Diurethandiacrylat, Trimethylolpropantrimethacrylat, Neopentylglykoldiacrylat, 3'-Acryloxy-2',2'-dimethylpropyl 3-Acryloxy-2,2-dimethylpropionat, Bisphenol-A-Diacrylat, und 1,3,5- Triallyl-1,3,5-triazin-2,4,6-trion, und das Polythiol eines oder mehrere ist, ausgewählt aus Pentaerythritoltetrakis(3 -mercaptopropionat), Trimethylolpropantris(3 -mercaptopropionat), 4-Mercaptomethyl-3,6-dithia-1,8-octandiithiol, Pentaerythritoltetrakis(2-mercaptoacetat) und Trimethylolpropantris(2-mercaptoacetat).

**10.** Verbundmembran nach einem der Ansprüche 1-9, wobei die organische Membran ein Polymerisationsprodukt von Pentaerythritoltetrakis(3- Mercaptopropionat) und 1,3,5-Triallyl-1,3,5-triazin-2,4,6-trion umfasst.

**11.** Verfahren zur Herstellung einer Verbundmembran, wobei das Verfahren Folgendes umfasst:

Trocknen von ionenleitenden anorganischen Materialpartikeln, die eine hydrophobe Beschichtung umfassen, die auf mindestens einem Teil davon angeordnet ist, sodass eine Feuchtigkeitsmenge in den Partikeln 100 ppm oder weniger ist;
Treiben einer Kombination aus einer polymerisierbaren nichtwässrigen Verbindung, die auf einer Wasseroberfläche treiben kann, einem Lösungsmittel und einer Vielzahl der ionenleitenden anorganischen Materialpartikel auf einer Wasseroberfläche, um ein resultierendes Produkt zu bilden;
Blasen des resultierenden Produkts durch Zuführen eines Gases zu dem resultierenden Produkt;
Entfernen des Lösungsmittels aus dem resultierenden Produkt, um einen Rest zu bilden; und
Polymerisieren des Rests, um die Verbundmembran nach einem der Ansprüche 1-10 herzustellen;
wobei die polymerisierbare nichtwässrige Verbindung, die auf einer Wasseroberfläche treiben kann, Folgendes umfasst: ein oder mehrere multifunktionelle Monomere, ausgewählt aus einem multifunktionellen Acrylmonomer und einem polyfunktionellen Vinylmonomer, oder ii) eine Mischung aus einem oder mehreren multifunktionellen Monomeren, ausgewählt aus einem multifunktionellen Acrylmonomer, einem polyfunktionellen Vinylmonomer und einem Polythiol mit drei oder vier Thiolgruppen; und
wobei die Vielzahl der ionenleitenden anorganischen Materialpartikel glasartige Aktivmaterial-Ionenleiter, amorphe Aktivmaterial-Ionenleiter, keramische Aktivmaterial-Ionenleiter, glaskeramische Aktivmaterial-Ionenleiter oder eine Kombination davon sind.

**12.** Verfahren nach Anspruch 11, wobei:

das Treiben Folgendes umfasst:

ein erstes Treiben, umfassend ein Platzieren eines Abschnitts einer weiteren Kombination umfassend eine polymerisierbare nichtwässrige Verbindung, die auf einer Wasseroberfläche treiben kann, und ein Lösungsmittel in Wasser, um ein weiteres resultierendes Produkt zu bilden;
ein zweites Treiben, umfassend ein Bereitstellen einer Vielzahl von ionenleitenden anorganischen Materialpartikeln mit einer hydrophoben Beschichtung, die auf mindestens einem Teil davon gebildet ist, zu dem weiteren resultierenden Produkt, um die ionenleitenden anorganischen Materialpartikel auf einer Wasseroberfläche zu platzieren; und
ein drittes Treiben, umfassend ein Platzieren eines Rests der weiteren Kombination aus der polymerisierbaren nichtwässrigen Verbindung und dem Lösungsmittel in dem Wasser.

**13.** Negative Elektrodenstruktur, umfassend:

eine negative Elektrode und
die Verbundmembran nach einem der Ansprüche 1-10.

**14.** Verfahren zur Herstellung einer negativen Elektrodenstruktur, umfassend:

- Herstellen einer Verbundmembran nach dem Verfahren nach Anspruch 11 oder 12, und
- Montieren der Verbundmembran auf eine negative Elektrode, optional mit einem Elektrolyten, der zwischen der Verbundmembran und der negativen Elektrode angeordnet ist.

**15.** Lithiumakkumulator, umfassend die negative Elektrodenstruktur nach Anspruch 13, optional wobei der Lithiumakkumulator eine Lithium-Luft-Batterie ist.

**16.** Verfahren zur Herstellung eines Lithiumakkumulator, umfassend:

- ein Herstellen einer Verbundmembran gemäß dem Verfahren nach Anspruch 11 oder 12, und
- ein Zusammensetzen einer Lithium-Luft-Batterie, sodass die Verbundmembran zwischen einer positiven Elektrode und einer auf einem Substrat gebildeten negativen Elektrode angeordnet ist, optional mit einem Elektrolyten, der zwischen der Verbundmembran und der negativen Elektrode angeordnet ist.

## Revendications

**1.** Membrane composite comprenant :

une membrane organique comprenant une pluralité de trous traversants et une pluralité de particules de matériau inorganique conductrices d'ions dans les trous traversants, dans laquelle un revêtement hydrophobe est sur au moins une partie de la pluralité de particules de matériau inorganique conductrices d'ions ;
dans laquelle un angle de contact des particules de matériau inorganique conductrices d'ions dans la membrane composite vers l'eau est 30° à 90°, préférablement dans laquelle l'angle de contact est 40° à 85° ;
la membrane organique comprend :

i) un produit de polymérisation d'un ou de plusieurs monomères multifonctionnels sélectionnés parmi un monomère multifonctionnel à base acrylique et un monomètre polyfonctionnel à base vinylique, ou
ii) un produit de polymérisation comprenant un ou plusieurs monomères multifonctionnels sélectionnés parmi un monomère acrylique multifonctionnel et un monomère vinylique multifonctionnel, et un polythiol comprenant trois ou quatre groupes thiol ; et

la pluralité de particules de matériau inorganique conductrices d'ions sont des conducteurs d'ions de matériau actif vitreux, des conducteurs d'ions de matériau actif amorphe, des conducteurs d'ions de matériau actif céramique, des conducteurs d'ions de matériau actif verre-céramique, ou une combinaison de ceux-ci.

**2.** Membrane composite selon la revendication 1, dans laquelle le revêtement hydrophobe est disposé sur une surface de la pluralité de particules de matériau inorganique conductrices d'ions qui n'est pas exposée à travers une surface de la membrane composite.

**3.** Membrane composite selon la revendication 1 ou 2, dans laquelle le revêtement hydrophobe comprend un produit de réaction de condensation d'au moins un composé sélectionné parmi les composés représentés par la Formule 1 :

Formule 1

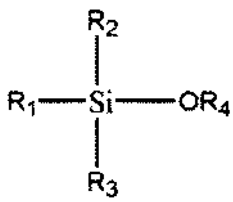

dans laquelle dans la Formule 1, $R_1$ à $R_3$ sont chacun indépendamment sélectionnés parmi un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe aryle en C6 à C20 substitué ou non substitué, un groupe arylalkyle en C7 à C20 substitué ou non substitué, un groupe aryloxy en C6 à C20 substitué ou non substitué, un groupe hétéroaryle en C2 à C20 substitué ou non substitué, un groupe hétéroaryloxy en C2 à C20 substitué ou non substitué, un groupe hétéroarylalkyle en C3 à C20 substitué ou non substitué, et un groupe hétérocylique en C2 à C20 substitué ou non substitué, ou un atome d'halogène, et $R_4$ est hydrogène, un groupe alkyle en C1 à C20 substitué ou non substitué, ou un groupe aryle en C6 à C20 substitué ou non substitué, préférablement dans laquelle :

le composé représenté par la Formule 1 est un ou plusieurs éléments sélectionnés parmi le triméthoxysilane d'isobutyle, le triméthoxysilane d'octyle, le triméthoxysilane de propyle, le triméthoxysilane de décyle, le triméthoxysilane de dodécyle, le triméthoxysilane d'octadécyle, le le triméthoxysilane de 3-méthacryloxypropyle, le triéthoxysilane de n-octadécyle, le triéthoxysilane de 1H, 1H, 2H, 2H-perfluorooctyle, et le triméthoxysilane de 3-mercaptopropyle ; et/ou
une quantité du produit de réaction de condensation d'au moins un composé sélectionné parmi les composés représentés par la Formule 1 est 0,1 partie en poids pour 30 parties en poids, sur la base de 100 parties en poids de la pluralité de particules de matériau inorganique conductrices d'ions.

**4.** Membrane composite selon l'une quelconque des revendications 1 à 3, dans laquelle une surface de la membrane composite comprend :

une structure mer-île, dans laquelle les particules de matériau inorganique conductrices d'ions sont agencées de manière discontinue dans une membrane organique continue, ou une structure alignée en alternance, dans laquelle une coupe transversale de la membrane composite comprend la membrane organique qui est alternée avec les particules de matériau inorganique conductrices d'ions.

**5.** Membrane composite selon l'une quelconque des revendications 1 à 4, dans laquelle la membrane organique comprend un ou plusieurs éléments parmi un homopolymère, un copolymère séquencé, et un copolymère statistique.

**6.** Membrane composite selon l'une quelconque des revendications 1 à 5, dans laquelle la pluralité de particules de matériau inorganique conductrices d'ions incrustées dans la membrane organique sont agencées comme une monocouche ou dans laquelle la pluralité de particules de matériau inorganique conductrices d'ions sont sous la forme d'une particule unique sans limite de grain entre les particules de matériau inorganique conductrices d'ions.

**7.** Membrane composite selon l'une quelconque des revendications 1 à 6, dans laquelle la pluralité de particules de matériau inorganique conductrices d'ions sont une ou plusieurs particules parmi $Li_{1+x+y}Al_xTi_{2-x}Si_yP_{3-y}O_{12}$ (dans laquelle $0<x<2$ et $0\leq y<3$), $BaTiO_3$, $Pb(Zr,Ti)O_3$, $Pb_{1-x}La_xZr_{1-y}Ti_yO_3$ (dans laquelle $0\leq x<1$ et $0\leq y<1$), $Pb(Mg_3Nb_{2/3})O_3$-$PbTiO_3$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, SiC, $Li_3PO_4$, $Li_xTi_y(PO_4)_3$ (dans laquelle $0<x<2$ et $0<y<3$), $Li_xAl_yTi_z(PO_4)_3$ (dans laquelle $0<x<2$, $0<y<1$, et $0<z<3$), $Li_{1+x+y}(Al, Ga)_x(Ti, Ge)_{2-x}Si_yP_{3-y}O_{12}$ (dans laquelle $0\leq x\leq 1$ et $0\leq y\leq 1$), $Li_xLa_yTiO_3$ (dans laquelle $0<x<2$ et $0<y<3$), $Li_xGe_yP_zS_w$ (dans laquelle $0<x<4$, $0<y<1$, $0<z<1$, et $0<w<5$), $Li_xN_y$ (dans laquelle $0<x<4$ et $0<y<2$), $Li_xSi_yS_z$ (dans laquelle $0<x<3$, $0<y<2$, et $0<z<4$), $Li_xP_yS_z$ (dans laquelle $0<x<3$, $0<y<3$, et $0<z<7$), $Li_2O$, LiF, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (dans laquelle $0<x<10$ et M = Te, Nb, ou Zr), et une combinaison de celles-ci.

**8.** Membrane composite selon l'une quelconque des revendications 1 à 7, dans laquelle la membrane organique comprend un polymère, qui est une barrière contre l'humidité et une barrière contre le gaz.

**9.** Membrane composite selon l'une quelconque des revendications 1 à 8,
dans laquelle le monomère multifonctionnel est de préférence un ou plusieurs monomères sélectionnés parmi le diméthacrylate de diuréthane, le triacrylate de triméthylolpropane, le diacrylate de diuréthane, le triméthacrylate de triméthylolpropane, le diacrylate de néopentylglycol, le 3-acryloxy-2,2-diméthylpropionate de 3'-acryloxy-2',2'-diméthylpropyle, le diacrylate de bisphénol A, et la 1,3,5- triallyl-1,3,5-triazine-2,4,6-trione, et le polythiol est un ou plusieurs éléments sélectionnés parmi le tétrakis(3- mercaptopropionate) de pentaérythritol, le tris(3-mercaptopropionate) de triméthylolpropane, le 4-mercaptométhyl-3,6-dithia-1,8-octanedithiol, le tétrakis(2-mercaptoacétate) de pentaérythritol, et le tris(2-mercaptoacétate) de triméthylolpropane.

**10.** Membrane composite selon l'une quelconque des revendications 1 à 9, dans laquelle la membrane organique comprend un produit de polymérisation de tétrakis(3- mercaptopropionate) de pentaérythritol et de 1,3,5-triallyl-1,3,5-triazine-2,4,6-trione.

**11.** Procédé de préparation d'une membrane composite, le procédé comprenant :

le séchage de particules de matériau inorganique conductrices d'ions comprenant un revêtement hydrophobe disposé sur au moins une partie de celles-ci de sorte qu'une quantité d'humidité dans les particules est 100 ppm ou moins ;
la mise en flottaison d'une combinaison d'un composé non aqueux polymérisable capable de flotter sur une surface d'eau, un solvant, et une pluralité des particules de matériau inorganique conductrices d'ions sur une surface d'eau pour former un produit résultant ;

le soufflement sur le produit résultant en acheminant un gaz sur le produit résultant ; l'élimination du solvant du produit résultant pour former un résidu ; et

la polymérisation du résidu pour préparer la membrane composite selon l'une quelconque des revendications 1 à 10 ; dans laquelle le composé non aqueux polymérisable capable de flotter sur une surface d'eau comprend : un ou plusieurs monomères multifonctionnels sélectionnés parmi un monomère acrylique multifonctionnel et un monomère vinylique polyfonctionnel, ou ii) un mélange d'un ou de plusieurs monomères multifonctionnels sélectionnés parmi un monomère acrylique multifonctionnel, un monomère vinylique polyfonctionnel, et un polythiol ayant trois ou quatre groupes ; et

la pluralité de particules de matériau inorganique conductrices d'ions sont des conducteurs d'ions de matériau actif vitreux, des conducteurs d'ions de matériau actif amorphe, des conducteurs d'ions de matériau actif céramique, des conducteurs d'ions de matériau actif verre-céramique, ou une combinaison de ceux-ci.

**12.** Procédé selon la revendication 11, dans lequel :

la mise en flottaison comprend :

une première mise en flottaison comprenant le placement d'une partie d'une combinaison supplémentaire d'un composé non aqueux polymérisable capable de flotter sur une surface d'eau et d'un solvant dans l'eau pour former un produit résultant supplémentaire ;

une deuxième mise en flottaison fournissant une pluralité de particules de matériau inorganique conductrices d'ions ayant un revêtement hydrophobe formé sur au moins une partie de celles-ci au produit résultant supplémentaire pour placer les particules de matériau inorganique conductrices d'ions sur une surface d'eau ; et

une troisième mise en flottaison comprenant le placement d'un produit résiduel de la combinaison supplémentaire du composé non aqueux polymérisable et du solvant dans l'eau.

**13.** Structure d'électrode négative comprenant : une électrode négative et la membrane composite selon l'une quelconque des revendications 1 à 10.

**14.** Procédé de préparation d'une structure d'électrode négative comprenant :

- la préparation d'une membrane composite selon le procédé de la revendication 11 ou 12, et
- l'assemblage de la membrane composite sur une électrode négative, facultativement avec un électrolyte disposé entre la membrane composite et l'électrode négative.

**15.** Batterie secondaire au lithium comprenant la structure d'électrode négative selon la revendication 13, facultativement dans laquelle la batterie secondaire au lithium est une batterie lithium-air.

**16.** Procédé de préparation d'une batterie secondaire au lithium comprenant :

- la préparation d'une membrane composite selon le procédé de la revendication 11 ou 12, et
- l'assemblage d'une batterie lithium-air de sorte que la membrane composite est disposée entre une électrode positive et une électrode négative formée sur un substrat, facultativement avec un électrolyte disposé entre la membrane composite et l'électrode négative.

FIG. 1A

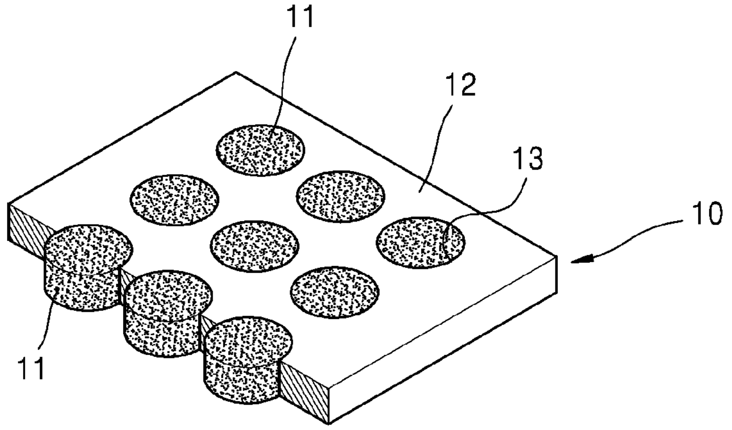


FIG. 1B

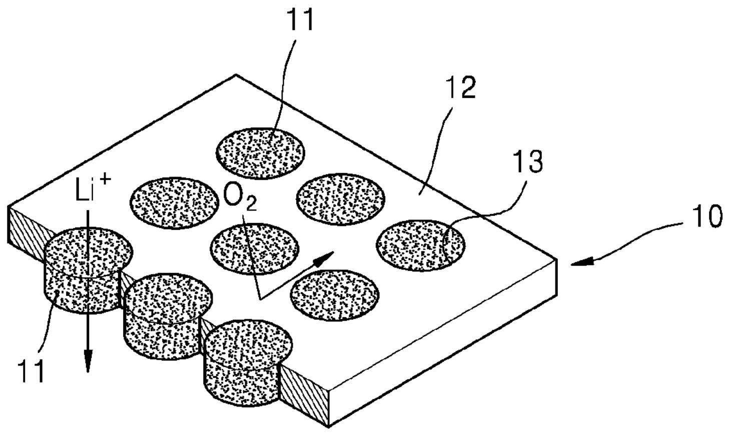

FIG. 2

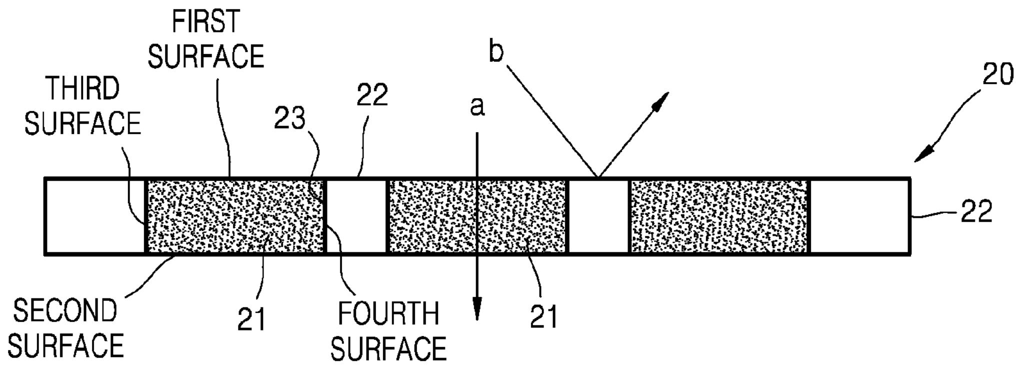
FIRST
SURFACE
THIRD
SURFACE
23
22
a
b
20
22
SECOND
SURFACE
21
FOURTH
SURFACE
21

FIG. 3A

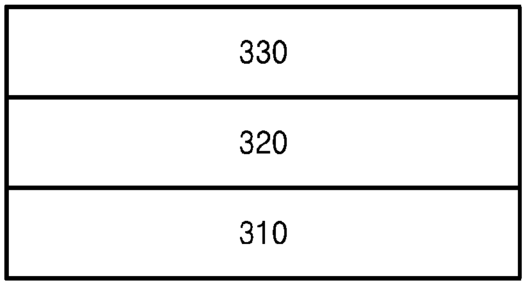


FIG. 3B

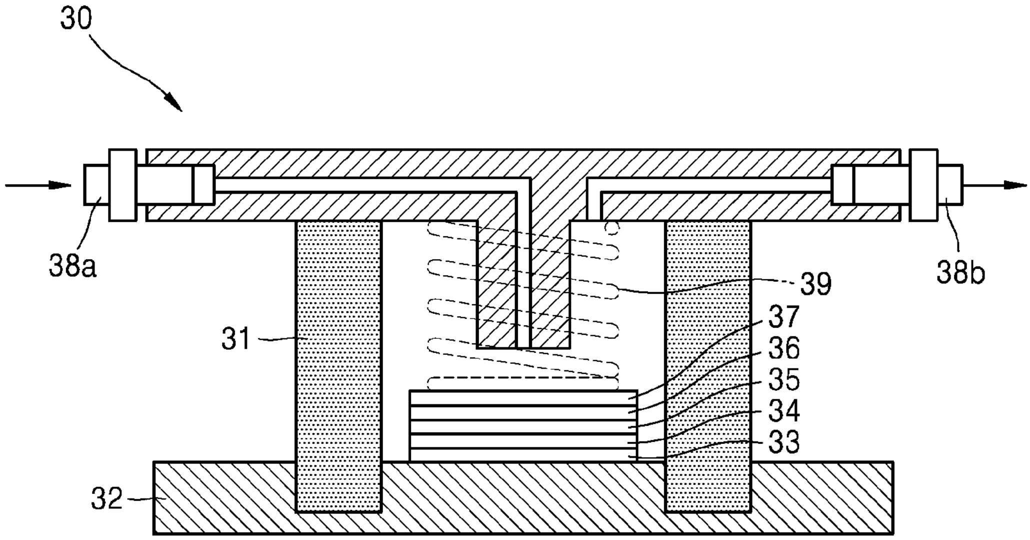

FIG. 3C

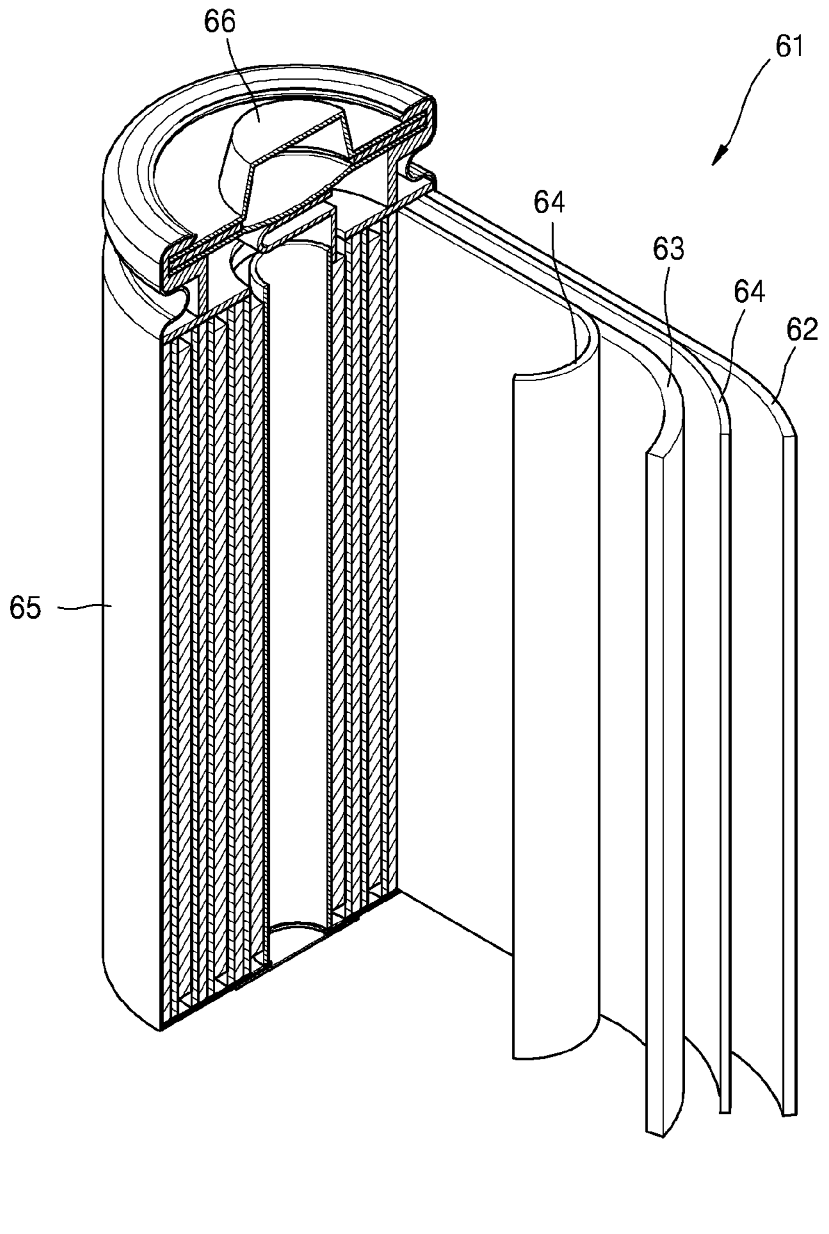

# FIG. 4

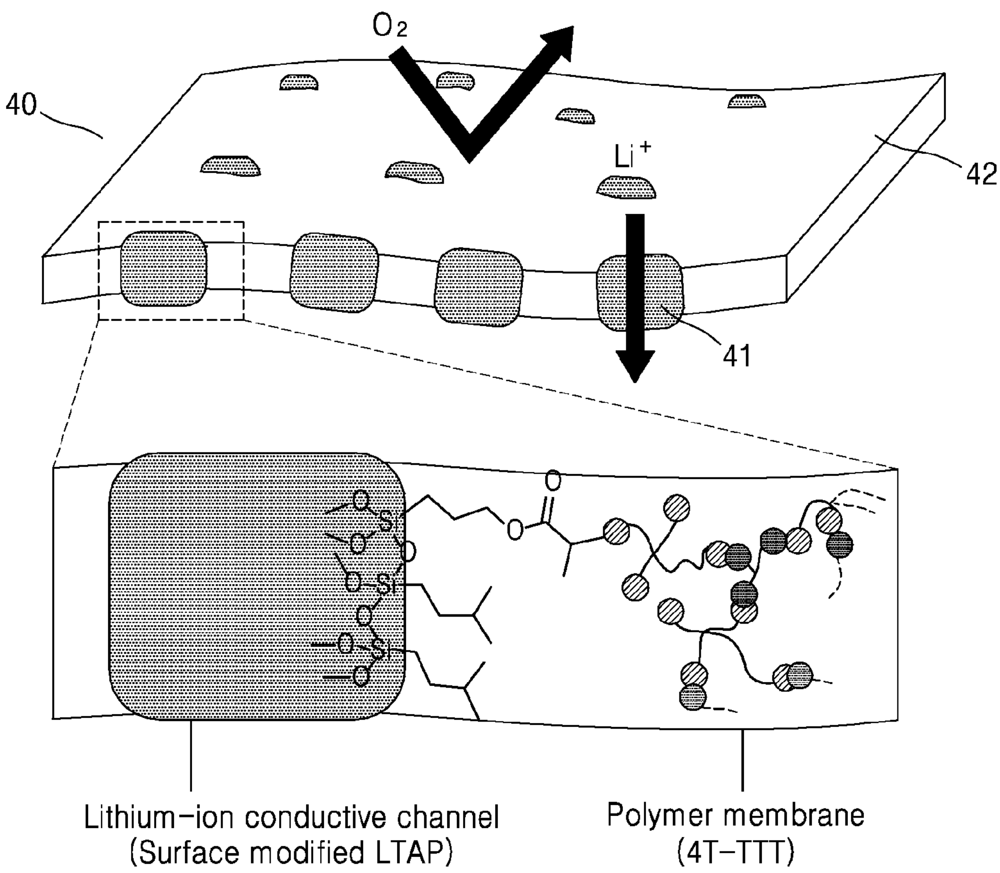
O2
40
42
Li+
41
Lithium-ion conductive channel
(Surface modified LTAP)
Polymer membrane
(4T-TTT)

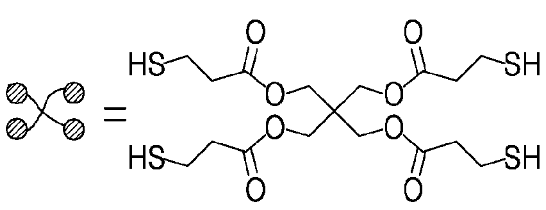

4T

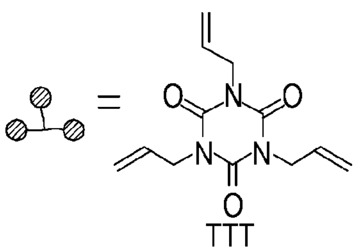

TTT

FIG. 5

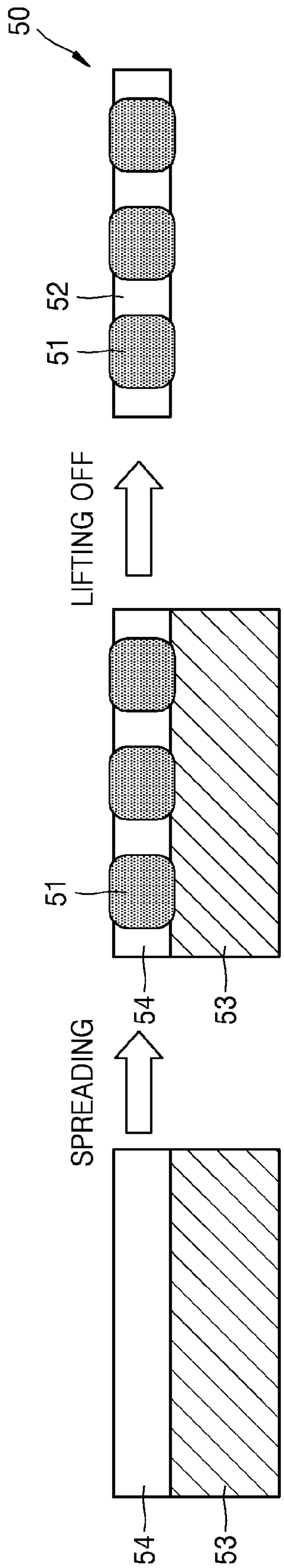

FIG. 6A

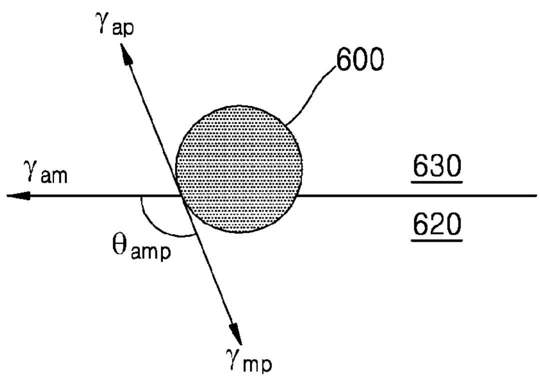


FIG. 6B

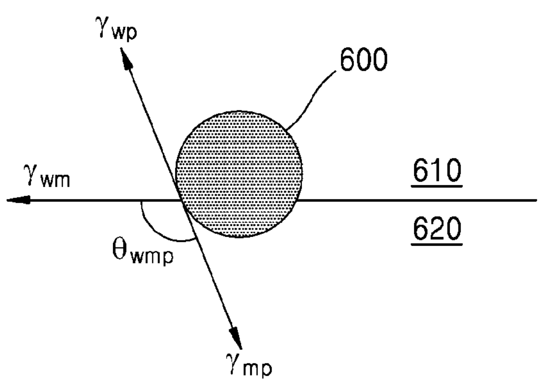

FIG. 6C

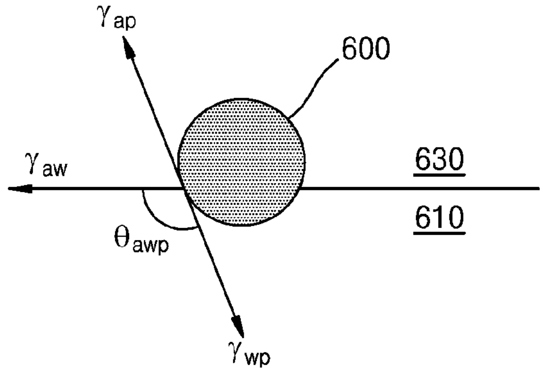
$\gamma_{ap}$
600
$\gamma_{aw}$
630
610
$\theta_{awp}$
$\gamma_{wp}$

FIG. 6D

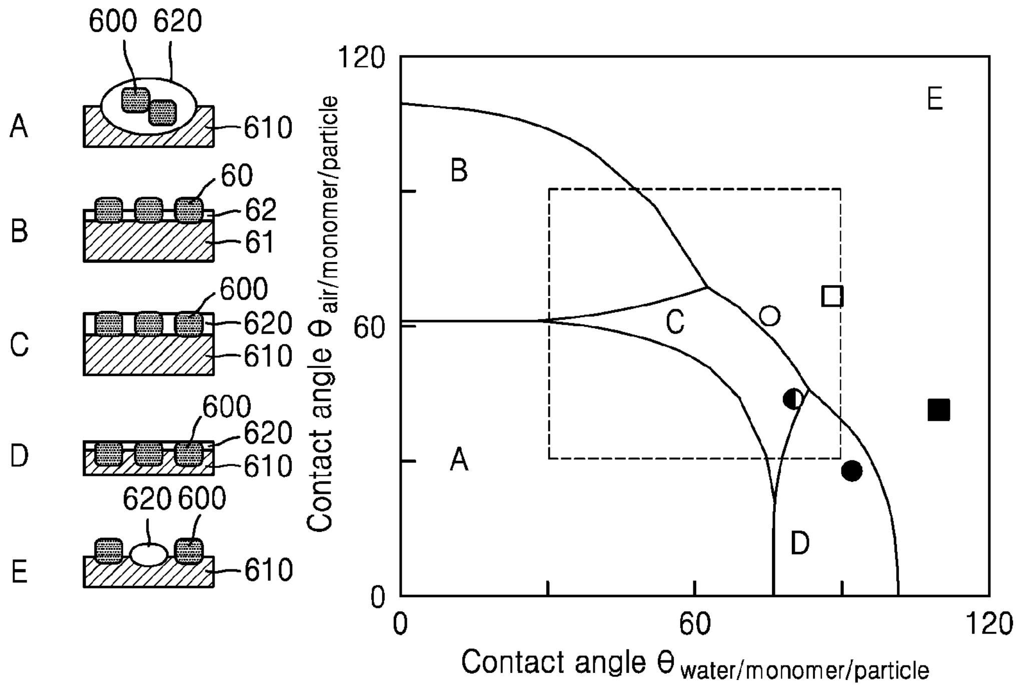
600 620
A
610
60
B
62
61
600
C
620
610
600
D
620
610
620 600
E
610
120
60
0
0
60
120
Contact angle $\theta_{air/monomer/particle}$
Contact angle $\theta_{water/monomer/particle}$
A
B
C
D
E

FIG. 7A

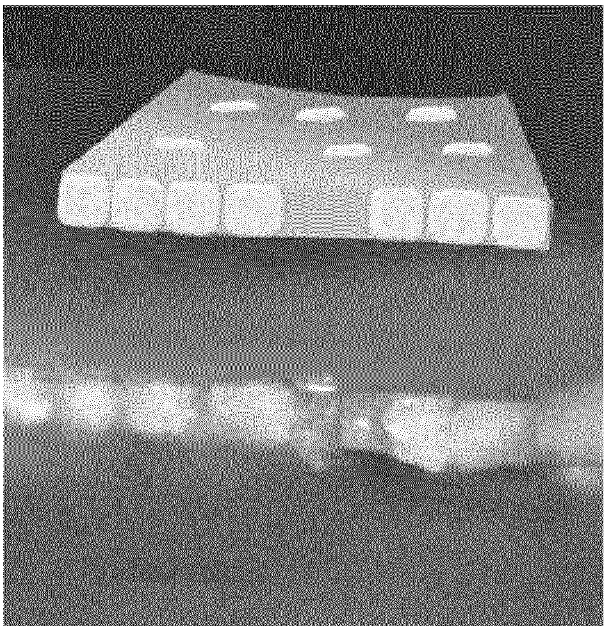

FIG. 7B

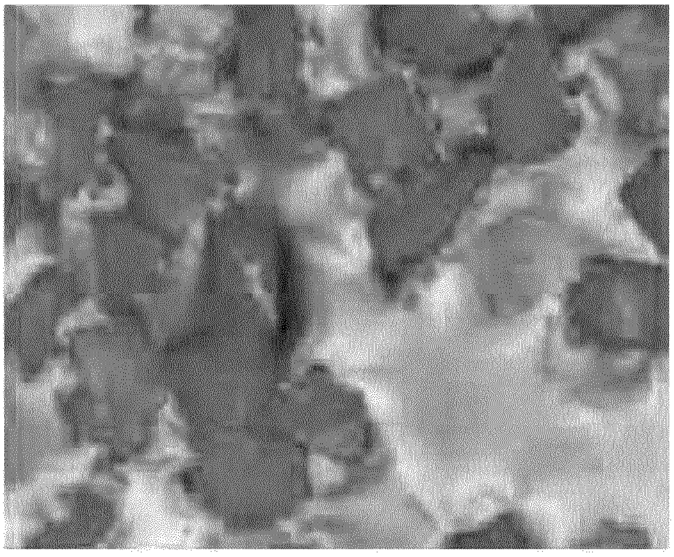

FIG. 7C

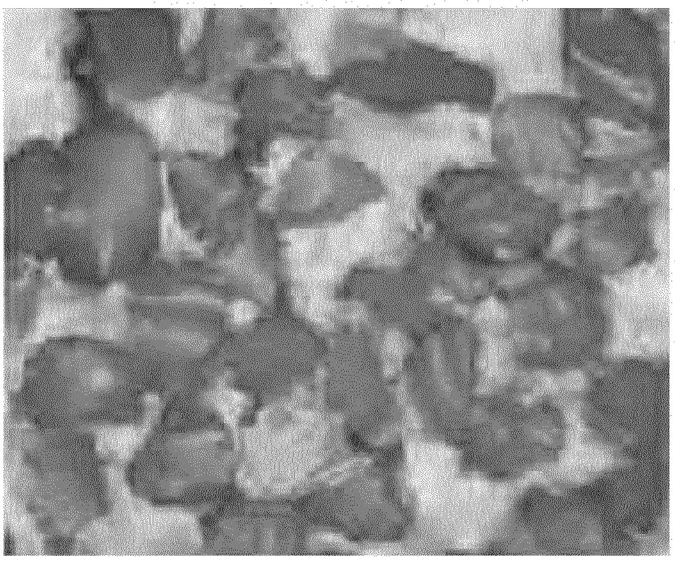

FIG. 8A

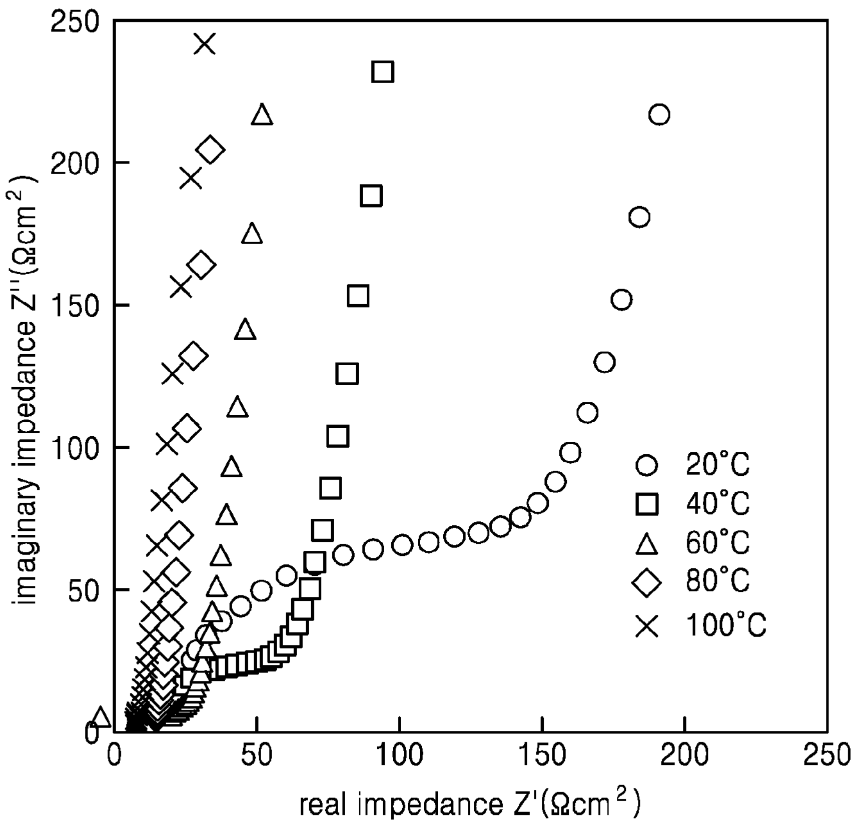
250
200
150
100
50
0
0
50
100
150
200
250
imaginary impedance Z''(Ωcm²)
real impedance Z'(Ωcm²)
20°C
40°C
60°C
80°C
100°C

# FIG. 8B

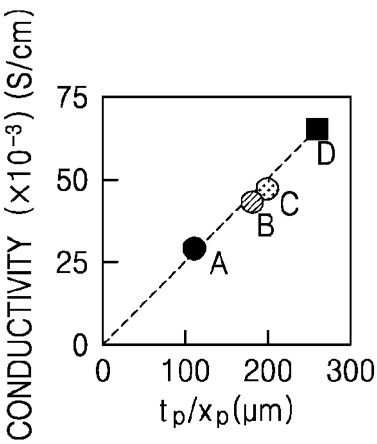

FIG. 8C

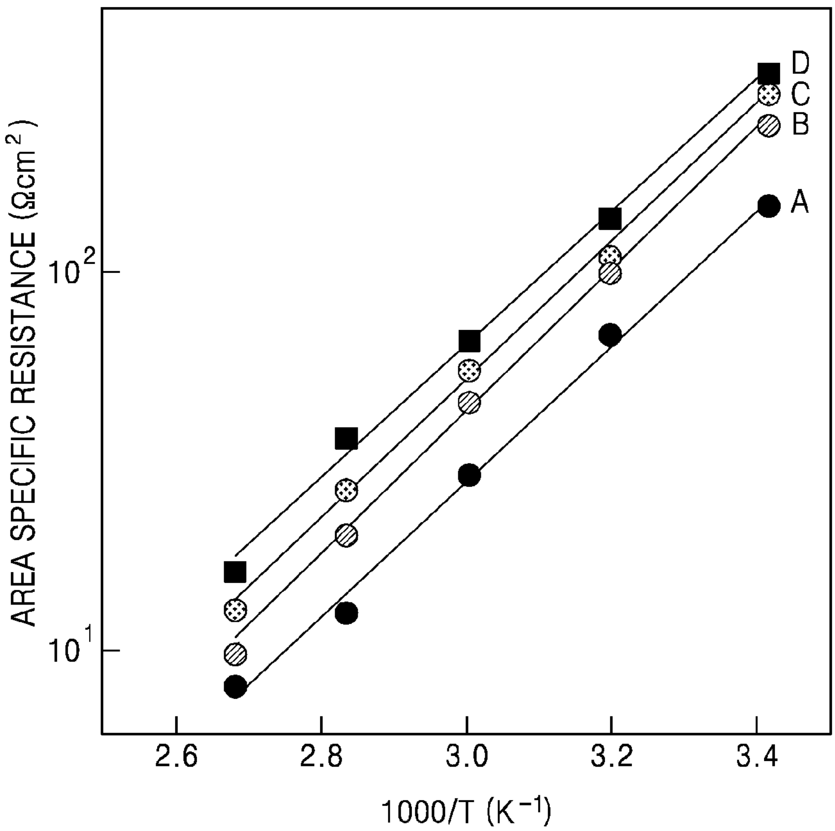
D
C
B
A
AREA SPECIFIC RESISTANCE (Ωcm²)
10²
10¹
2.6
2.8
3.0
3.2
3.4
1000/T (K⁻¹)

FIG. 8D

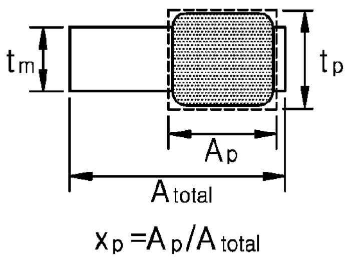

FIG. 9

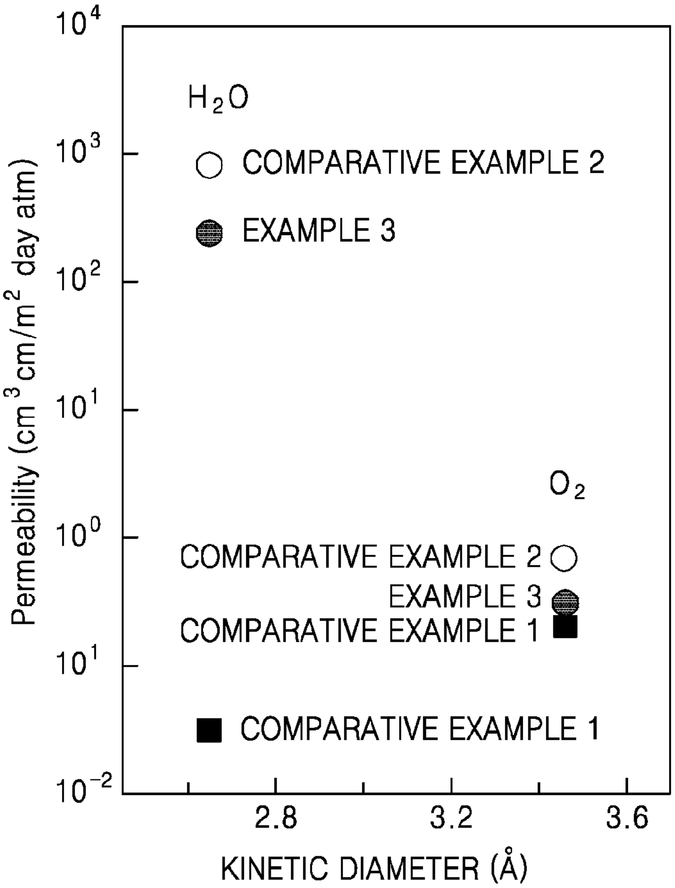
$10^4$
$10^3$
$10^2$
$10^1$
$10^0$
$10^1$
$10^{-2}$
Permeability ($cm^3 cm/m^2$ day atm)
$H_2O$
COMPARATIVE EXAMPLE 2
EXAMPLE 3
$O_2$
COMPARATIVE EXAMPLE 2
EXAMPLE 3
COMPARATIVE EXAMPLE 1
COMPARATIVE EXAMPLE 1
2.8
3.2
3.6
KINETIC DIAMETER (Å)

FIG. 10

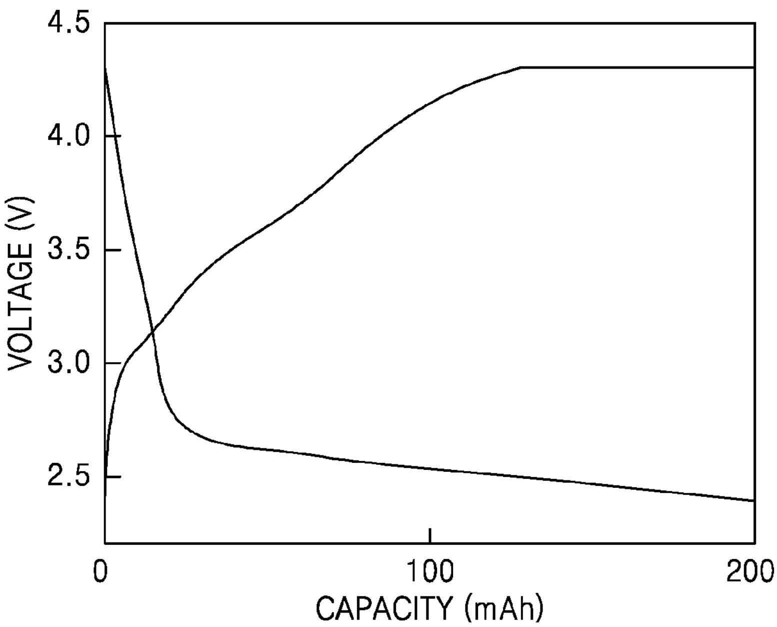

FIG. 11

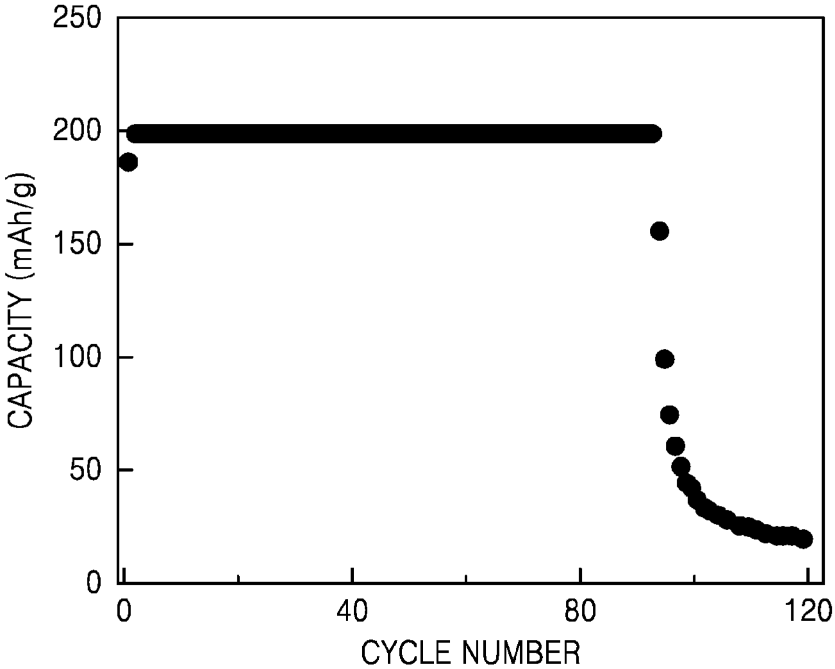

FIG. 12A

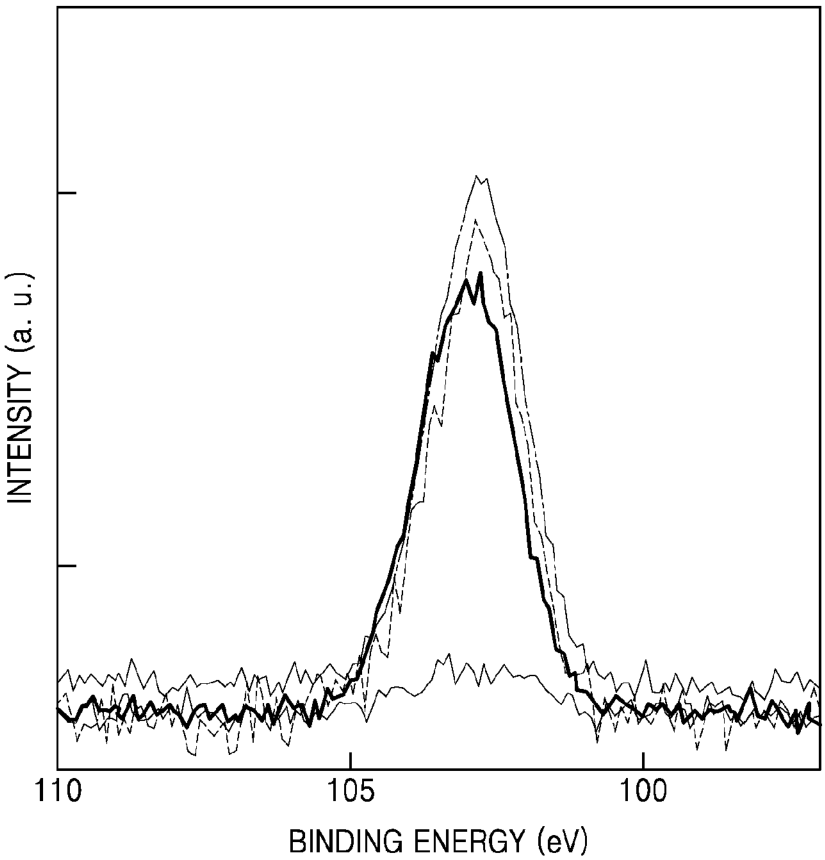

FIG. 12B

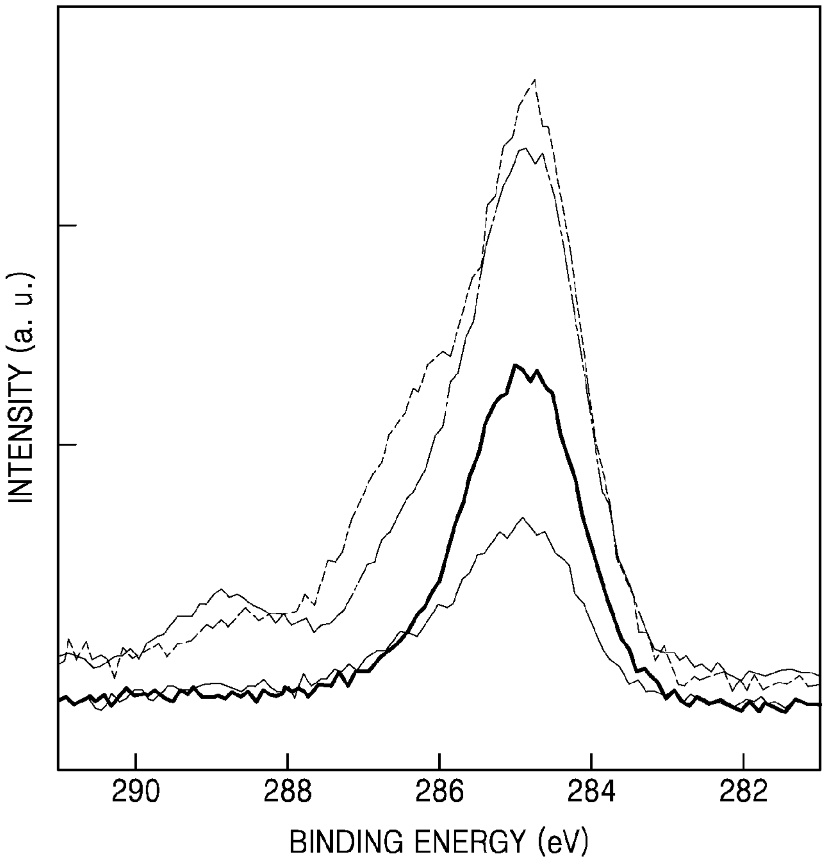

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015079485 A1
- US 2015024256 A1